# EUROPEAN PATENT APPLICATION

(11) **EP 4 826 702 A1**
(43) Date of publication of application: **21.10.2026**
(21) Application number: 24921648.2
(22) Date of filing: 20.11.2024
(51) Int. Cl.: G09F 3/02

(54) **LABEL STRUCTURAL MEMBER, OPTICAL FIBER CONNECTOR ASSEMBLY, AND COMMUNICATION DEVICE**

(30) Priority: 02.02.2024 CN 202420277294 U
(71) Applicant: Huawei Technologies Co., Ltd., Shenzhen, Guangdong 518129 (CN)
(72) Inventor: LIANG, Wei, Shenzhen, Guangdong 518129 (CN); ZHU, Delin, Shenzhen, Guangdong 518129 (CN); HU, Jian, Shenzhen, Guangdong 518129 (CN)
(74) Representative: Pfenning, Meinig & Partner mbB
(86) International application number: PCT/CN2024/133354
(87) International publication number: WO 2025/161626

(57) **Abstract**

This application provides a label structural member, an optical fiber connector assembly, and a communication device. The label structural member includes a head portion, a tail portion, and a connecting portion connected between the head portion and the tail portion. The head portion is configured to connect to an optical fiber connector. The tail portion includes an identification area, and the identification area is configured to be provided with label information. The label structural member further includes a fiber clip disposed on the connecting portion, and the fiber clip is configured to clamp an optical fiber connected to the optical fiber connector. In this application, because the fiber clip is disposed on the connecting portion, the fiber clip may be used to clamp an optical fiber connected to the optical fiber connector. After the optical fiber is fastened, a gap between the optical fiber connected to the optical fiber connector and the connecting portion can be reduced. In this way, a probability that another optical fiber is inserted into the gap between the optical fiber connected to the optical fiber connector and the connecting portion can be reduced. In addition, a part of accommodating space between the head portion and the tail portion can be occupied by using the fiber clip and the optical fiber connected to the optical fiber connector, and a probability that the another optical fiber passes through the accommodating space between the head portion and the tail portion is reduced.

## Description

This application claims priority to Chinese Patent Application No. 202420277294.1, filed with the China National Intellectual Property Administration on February 2, 2024 and entitled "LABEL STRUCTURAL MEMBER, OPTICAL FIBER CONNECTOR ASSEMBLY, AND COMMUNICATION DEVICE", which is incorporated herein by reference in its entirety.

### TECHNICAL FIELD

This application relates to the field of optical fiber communication, and in particular, to a label structural member, an optical fiber connector assembly, and a communication device.

### BACKGROUND

In optical networks in related technologies, a network node includes a plurality of adapters, and each adapter is configured to receive and fasten an optical fiber connector assembly. A quantity of adapters included in the network node is increasing, and therefore there are a large quantity of optical fibers connected to optical fiber connector assemblies. Consequently, the large quantity of optical fibers connected to a large quantity of optical fiber connector assemblies and the optical fiber connector assemblies interfere with each other, which causes loosening between the optical fiber connector assemblies and the adapters, and results in a failure of normal optical signal interaction.

### SUMMARY

Embodiments of this application provide a label structural member, an optical fiber connector assembly, and a communication device, to resolve a problem that a large quantity of optical fibers and optical fiber connector assemblies interfere with each other, and ensure stability of a connection between the optical fiber connector assembly and an adapter.

According to a first aspect, an embodiment of this application provides a label structural member. The label structural member includes a head portion, a tail portion, and a connecting portion connected between the head portion and the tail portion. The head portion is configured to connect to an optical fiber connector. The tail portion includes an identification area, and the identification area is configured to be provided with label information. By using the label structural member in this embodiment, the identification area of the tail portion can facilitate scanning of an identification code by a camera device, which helps accurately identify information corresponding to a port and implementing digital management of port resources.

In some embodiments, the label structural member further includes a guide rail structure. The guide rail structure is connected between the other end of the connecting portion in an extension direction and a first surface of the tail portion facing the head portion. In this embodiment, the guide rail structure can effectively guide another optical fiber between the head portion and the tail portion to disengage from the first surface along the guide rail structure, thereby preventing the another optical fiber and the tail portion from interfering with each other.

In some embodiments, a plurality of corner portions are formed by outer edges of the first surface, one end of the connecting portion in an extension direction is connected to the head portion, and the guide rail structure is connected between the other end of the connecting portion in the extension direction and the plurality of corner portions. The guide rail structure extends from the connecting portion to the plurality of corner portions of the first surface, that is, the guide rail structure extends from the connecting portion to each corner portion of the first surface. In this way, the another optical fiber can disengage from any corner portion via the guide rail structure, and the another optical fiber can disengage from the first surface. This ensures that the optical fiber and the optical fiber connector assembly do not interfere with each other, and ensures that optical fiber connector assemblies arranged in high density can be properly and stably connected to the adapter.

In some embodiments, the guide rail structure includes a plurality of guide portions. The plurality of guide portions extend to the plurality of corner portions from the other end of the connecting portion in the extension direction, and each corner portion is connected to the guide portion. In this embodiment, because the plurality of guide portions extend from the other end of the connecting portion in the extension direction to the plurality of corner portions, the another optical fiber located between the head portion and the tail portion can smoothly disengage from the plurality of corner portions of the first surface via the plurality of guide portions. In addition, because each corner portion is connected to the guide portion, each corner portion can be guided by the guide portion, to prevent the corner portion from clamping the another optical fiber. In this way, the another optical fiber located between the head portion and the tail portion can avoid interference with the tail portion, to ensure that optical fiber connector assemblies arranged in high density can be properly and stably connected to adapters. In addition, because the guide rail structure in this embodiment is formed by the plurality of guide portions, the guide portions may be properly arranged based on positions of the plurality of corner portions of the first surface, thereby improving design diversity of the guide portions.

In some embodiments, each guide portion includes a guide surface. The guide surface extends from the other end of the connecting portion in the extension direction to at least one of the plurality of corner portions. In this embodiment, because the guide surface extends from the other end in the extension direction X of the connecting portion to the at least one of the plurality of corner portions, the another optical fiber located between the head portion and the tail portion can slide along the guide surface from the connecting portion to the corner portion of the first surface, then disengage from the first surface from the corner portion of the first surface, and finally disengage from the tail portion. This can prevent the tail portion and the another optical fiber located between the head portion and the tail portion from interfering with each other, to ensure that the optical fiber connector assemblies arranged in high density can be properly and stably connected to the adapters.

In some embodiments, the plurality of guide portions include at least one first guide portion. The first guide portion includes a first guide surface, and the first guide surface extends from the other end of the connecting portion in the extension direction to one of the plurality of corner portions. The first guide portion in this embodiment is adapted to a scenario in which the first surface is of a plurality of shapes, and has a wide application scope.

In some embodiments, the plurality of guide portions include at least one second guide portion. The second guide portion includes a second guide surface, and the second guide surface extends from the other end of the connecting portion in the extension direction to two adjacent corner portions of the plurality of corner portions. In this embodiment, because the second guide surface extends from the other end of the connecting portion in the extension direction to two adjacent corner portions of the plurality of corner portions, a possibility that the another optical fiber passes through a region between the second guide portion and the first surface can be reduced.

In some embodiments, the label structural member further includes a fiber clip located between the head portion and the tail portion. The fiber clip is disposed on the connecting portion or the guide rail structure, and the fiber clip is configured to clamp an optical fiber connected to the optical fiber connector. In this embodiment, because the fiber clip is disposed on the connecting portion, the fiber clip may be used to clamp the optical fiber connected to the optical fiber connector. After the optical fiber is fastened, a gap between the optical fiber connected to the optical fiber connector and the connecting portion can be reduced, so that a probability that the another optical fiber is inserted into the gap between the optical fiber connected to the optical fiber connector and the connecting portion is greatly reduced. In addition, after the fiber clip is disposed, and the optical fiber connected to the optical fiber connector is fastened to the fiber clip, a part of the accommodating space between the head portion and the tail portion can be occupied by using the fiber clip and the optical fiber connected to the optical fiber connector, and a probability that the another optical fiber passes through the accommodating space between the head portion and the tail portion can be reduced.

In some embodiments, the fiber clip is provided with a slot that extends in the extension direction through the connecting portion. A size of an opening of the slot may be greater than, less than, or equal to a diameter of the optical fiber connected to the optical fiber connector. In this embodiment, the optical fiber connected to the optical fiber connector may pass through the slot, to effectively fasten the optical fiber on the fiber clip through the slot. This ensures clamping stability.

In some embodiments, the fiber clip includes an inclined surface facing the head portion, and the inclined surface extends from the connecting portion to an end portion of the fiber clip away from the connecting portion. The inclined surface forms an obtuse angle with the extension direction of the connecting portion. In this embodiment, because the inclined surface forms the obtuse angle with the extension direction of the connecting portion, the another optical fiber located between the fiber clip and the head portion can easily leave a region between the fiber clip and the head portion from the inclined surface, without interfering with the fiber clip.

In some embodiments, the identification area is a surface of the tail portion away from the head portion. That is, in an axial direction or a length direction of the optical fiber connector, the identification area is disposed perpendicular to the axial direction of the optical fiber connector. In this embodiment, the identification area is located on a surface of the tail portion away from the head portion, and the identification area is disposed perpendicular to the axial direction of the optical fiber connector, which facilitates identification of label information on the identification area in the axial direction of the optical fiber connector.

In some embodiments, the tail portion is of a block-like structure with a plurality of surfaces, and at least two of the plurality of surfaces of the tail portion are identification areas. In this embodiment, when the optical fiber connector assembly is inserted into the adapter, the identification area on the tail portion may be scanned by using a camera device on a front side, or the identification area on the tail portion may be scanned by using a camera device disposed in another direction, so that application scenarios are diversified.

In some embodiments, an outer surface of the connecting portion is the identification area used to set label information. In this embodiment, an identification area on the connecting portion may be scanned by using camera devices in a plurality of directions, so that application scenarios are diversified.

In some embodiments, an outer surface of the head portion is an identification area used to set the label information. In this embodiment, an identification area on the head portion may be scanned by using camera devices in a plurality of directions, so that application scenarios are diversified.

According to a second aspect, an embodiment of this application provides a label structural member. The label structural member includes a head portion, a tail portion, and a connecting portion connected between the head portion and the tail portion. The head portion is configured to connect to an optical fiber connector. The tail portion includes an identification area, and the identification area is configured to be provided with label information. The label structural member further includes a fiber clip disposed on the connecting portion, and the fiber clip is configured to clamp an optical fiber connected to the optical fiber connector. In this embodiment, because the fiber clip is disposed on the connecting portion, the fiber clip may be used to clamp the optical fiber connected to the optical fiber connector. After the optical fiber is fastened, a gap between the optical fiber connected to the optical fiber connector and the connecting portion can be reduced, so that a probability that another optical fiber is inserted into the gap between the optical fiber connected to the optical fiber connector and the connecting portion is greatly reduced. In this way, occurrence of a case in which the label structural member and the another optical fiber interfere with each other can be effectively reduced, to effectively ensure stability of a connection between an optical fiber connector assembly and an adapter. In addition, after the fiber clip is disposed, and the optical fiber connected to the optical fiber connector is fastened to the fiber clip, a part of the accommodating space between the head portion and the tail portion can be occupied by using the fiber clip and the optical fiber connected to the optical fiber connector, and a probability that the another optical fiber passes through the accommodating space between the head portion and the tail portion can be reduced.

In some embodiments, the fiber clip is provided with a slot that extends in the extension direction through the connecting portion. A size of an opening of the slot may be greater than, less than, or equal to a diameter of the optical fiber connected to the optical fiber connector. In this embodiment, the optical fiber connected to the optical fiber connector may pass through the slot, to effectively fasten the optical fiber on the fiber clip through the slot. This ensures clamping stability.

In some embodiments, the fiber clip includes an inclined surface facing the head portion, and the inclined surface extends from the connecting portion to an end portion of the fiber clip away from the connecting portion. The inclined surface forms an obtuse angle with the extension direction of the connecting portion. In this embodiment, because the inclined surface forms the obtuse angle with the extension direction of the connecting portion, the another optical fiber located between the fiber clip and the head portion can easily leave a region between the fiber clip and the head portion from the inclined surface, without interfering with the fiber clip.

In some embodiments, the identification area is a surface of the tail portion away from the head portion. That is, in an axial direction or a length direction of the optical fiber connector, the identification area is disposed perpendicular to the axial direction of the optical fiber connector. In this embodiment, the identification area is located on a surface of the tail portion away from the head portion, and the identification area is disposed perpendicular to the axial direction of the optical fiber connector, which facilitates identification of label information on the identification area in the axial direction of the optical fiber connector.

In some embodiments, the label structural member further includes a guide rail structure. The guide rail structure is connected between the other end of the connecting portion in an extension direction and a first surface of the tail portion facing the head portion. In this embodiment, the guide rail structure can effectively guide another optical fiber between the head portion and the tail portion to disengage from the first surface along the guide rail structure, thereby preventing the another optical fiber and the tail portion from interfering with each other.

In some embodiments, the fiber clip is connected to the guide rail structure. Because the fiber clip is disposed on the guide rail structure, a distance between the fiber clip and the first surface can be further reduced on a premise of ensuring that the optical fiber connected to the optical fiber connector can be smoothly bent, which further reduces a probability that the another optical fiber passes through a region between the fiber clip and the first surface.

In some embodiments, a plurality of corner portions are formed by outer edges of the first surface, one end of the connecting portion in an extension direction is connected to the head portion, and the guide rail structure is connected between the other end of the connecting portion in the extension direction and the plurality of corner portions. The guide rail structure extends from the connecting portion to the plurality of corner portions of the first surface, that is, the guide rail structure extends from the connecting portion to each corner portion of the first surface. In this way, the another optical fiber can disengage from any corner portion via the guide rail structure, and the another optical fiber can disengage from the first surface. This ensures that the optical fiber and the optical fiber connector assembly do not interfere with each other, and ensures that optical fiber connector assemblies arranged in high density can be properly and stably connected to the adapter.

In some embodiments, the guide rail structure includes a plurality of guide portions. The plurality of guide portions extend to the plurality of corner portions from the other end of the connecting portion in the extension direction, and each corner portion is connected to the guide portion. In this embodiment, because the plurality of guide portions extend from the other end of the connecting portion in the extension direction to the plurality of corner portions, the another optical fiber located between the head portion and the tail portion can smoothly disengage from the plurality of corner portions of the first surface via the plurality of guide portions. In addition, because each corner portion is connected to the guide portion, each corner portion can be guided by the guide portion, to prevent the corner portion from clamping the another optical fiber. In this way, the another optical fiber located between the head portion and the tail portion can avoid interference with the tail portion, to ensure that optical fiber connector assemblies arranged in high density can be properly and stably connected to adapters. In addition, because the guide rail structure in this embodiment is formed by the plurality of guide portions, the guide portions may be properly arranged based on positions of the plurality of corner portions of the first surface, thereby improving design diversity of the guide portions.

In some embodiments, each guide portion includes a guide surface. The guide surface extends from the other end of the connecting portion in the extension direction to at least one of the plurality of corner portions. In this embodiment, because the guide surface extends from the other end in the extension direction X of the connecting portion to the at least one of the plurality of corner portions, the another optical fiber located between the head portion and the tail portion can slide along the guide surface from the connecting portion to the corner portion of the first surface, then disengage from the first surface from the corner portion of the first surface, and finally disengage from the tail portion. This can prevent the tail portion and the another optical fiber located between the head portion and the tail portion from interfering with each other, to ensure that the optical fiber connector assemblies arranged in high density can be properly and stably connected to the adapters.

In some embodiments, the plurality of guide portions include at least one first guide portion. The first guide portion includes a first guide surface, and the first guide surface extends from the other end of the connecting portion in the extension direction to one of the plurality of corner portions. The first guide portion in this embodiment is adapted to a scenario in which the first surface is of a plurality of shapes, and has a wide application scope.

In some embodiments, the plurality of guide portions include at least one second guide portion. The second guide portion includes a second guide surface, and the second guide surface extends from the other end of the connecting portion in the extension direction to two adjacent corner portions of the plurality of corner portions. In this embodiment, because the second guide surface extends from the other end of the connecting portion in the extension direction to two adjacent corner portions of the plurality of corner portions, a possibility that the another optical fiber passes through a region between the second guide portion and the first surface can be reduced.

In some embodiments, there is one first guide portion, and there are two second guide portion. The first surface includes four corner portions, which are a first corner portion, a second corner portion, a third corner portion, and a fourth corner portion respectively. The first guide surface extends from the other end of the connecting portion in the extension direction to the first corner portion. One second guide surface extends from the other end of the connecting portion in the extension direction to the second corner portion and the third corner portion, and the other second guide surface extends from the other end of the connecting portion in the extension direction to the third corner portion and the fourth corner portion. In this embodiment, the another optical fiber located in the accommodating space between the head portion and the tail portion slides over the first corner portion via the first guide surface, slides over the second corner portion and the third corner portion via one second guide surface, and slides over the third corner portion and the fourth corner portion via the other second guide surface, which can prevent all the four corner portions of the first surface from snagging the another optical fiber. This can prevent the tail portion and the another optical fiber located in the accommodating space between the head portion and the tail portion from interfering with each other. In addition, one second guide surface extends from the other end of the connecting portion in the extension direction to the second corner portion and the third corner portion, the other second guide surface extends from the other end of the connecting portion in the extension direction to the third corner portion and the fourth corner portion, and the two second guide surfaces are connected at the third corner portion. This can prevent, via the two second guide surfaces, the another optical fiber from passing through a region between the second guide portion and the first surface, and can further reduce a probability that an optical fiber mistakenly passes through a region between the first guide portion and the first surface.

In some embodiments, the first guide portion and the two second guide portions are all of plate-like structures. The first guide portion includes a first side portion extending from the first corner portion to the second guide portion in an extension direction of the first surface. The second guide portion includes a second side portion, and the second side portion is connected to an edge defined by two adjacent corner portions of the first surface. In this embodiment, this can prevent a through hole from being formed between the first guide portion and the first surface, to prevent the another optical fiber from mistakenly passing through the through hole between the first guide portion and the first surface. This can prevent a through hole from being formed between the second guide portion and the first surface, to prevent the another optical fiber from mistakenly passing through the through hole between the second guide portion and the first surface.

In some embodiments, the guide surface is a planar surface, a concave curved surface, or a convex curved surface. In this embodiment, through smooth transition of the guide surface from the connecting portion to the corner portion of the first surface, the another optical fiber may disengage from the tail portion along the guide surface.

In some embodiments, the guide portion is of a post-like structure. One end of the guide portion is connected to the other end of the connecting portion in the extension direction, and the other end of the guide portion is connected to one corner portion.

In some embodiments, the tail portion is of a block-like structure with a plurality of surfaces, and at least two of the plurality of surfaces of the tail portion are identification areas. In this embodiment, when the optical fiber connector assembly is inserted into the adapter, the identification area on the tail portion may be scanned by using a camera device on a front side, or the identification area on the tail portion may be scanned by using a camera device disposed in another direction, so that application scenarios are diversified.

In some embodiments, an outer surface of the connecting portion is the identification area used to set label information. In this embodiment, an identification area on the connecting portion may be scanned by using camera devices in a plurality of directions, so that application scenarios are diversified.

In some embodiments, an outer surface of the head portion is an identification area used to set the label information. In this embodiment, an identification area on the head portion may be scanned by using camera devices in a plurality of directions, so that application scenarios are diversified.

According to a third aspect, an embodiment of this application provides a label structural member. The label structural member includes a head portion, a connecting portion, a guide rail structure, and a tail portion that are sequentially connected. The head portion is configured to connect an optical fiber connector. The tail portion includes an identification area and a first surface. The identification area is configured to be provided with label information, the first surface faces the head portion, and a plurality of corner portions are formed by outer edges of the first surface. One end of the connecting portion in an extension direction is connected to the head portion. The guide rail structure is connected between the other end of the connecting portion in the extension direction and the plurality of corner portions. In this embodiment, the guide rail structure extends from the connecting portion to the plurality of corner portions of the first surface, that is, the guide rail structure extends from the connecting portion to each corner portion of the first surface. In this way, the another optical fiber can disengage from any corner portion via the guide rail structure, and the another optical fiber can disengage from the first surface, which can prevent the first surface and the another optical fiber from interfering with each other. In this way, when optical fiber connector assemblies are inserted into a subrack in high density, it is ensured that the optical fiber and the optical fiber connector assembly do not interfere with each other, and it is ensured that the optical fiber connector assemblies arranged in high density can be properly and stably connected to adapters.

In some embodiments, the guide rail structure includes a plurality of guide portions. The plurality of guide portions extend to the plurality of corner portions from the other end of the connecting portion in the extension direction, and each corner portion is connected to the guide portion. In this embodiment, because the plurality of guide portions extend from the other end of the connecting portion in the extension direction to the plurality of corner portions, the another optical fiber located between the head portion and the tail portion can smoothly disengage from the plurality of corner portions of the first surface via the plurality of guide portions. In addition, because each corner portion is connected to the guide portion, each corner portion can be guided by the guide portion, to prevent the corner portion from clamping the another optical fiber. In this way, the another optical fiber located between the head portion and the tail portion can avoid interference with the tail portion, to ensure that optical fiber connector assemblies arranged in high density can be properly and stably connected to adapters. In addition, because the guide rail structure in this embodiment is formed by the plurality of guide portions, the guide portions may be properly arranged based on positions of the plurality of corner portions of the first surface, thereby improving design diversity of the guide portions.

In some embodiments, each guide portion includes a guide surface. The guide surface extends from the other end of the connecting portion in the extension direction to at least one of the plurality of corner portions. In this embodiment, because the guide surface extends from the other end of the connecting portion in the extension direction to the at least one of the plurality of corner portions, the another optical fiber located between the head portion and the tail portion can slide along the guide surface from the connecting portion to the corner portion of the first surface, then disengage from the first surface from the corner portion of the first surface, and finally disengage from the tail portion. This can prevent the tail portion and the another optical fiber located between the head portion and the tail portion from interfering with each other, to ensure that the optical fiber connector assemblies arranged in high density can be properly and stably connected to the adapters.

In some embodiments, the plurality of guide portions include at least one first guide portion. The first guide portion includes a first guide surface, and the first guide surface extends from the other end of the connecting portion in the extension direction to one of the plurality of corner portions. The first guide portion in this embodiment is adapted to a scenario in which the first surface is of a plurality of shapes, and has a wide application scope.

In some embodiments, the plurality of guide portions include at least one second guide portion. The second guide portion includes a second guide surface, and the second guide surface extends from the other end of the connecting portion in the extension direction to two adjacent corner portions of the plurality of corner portions. In this embodiment, because the second guide surface extends from the other end of the connecting portion in the extension direction to two adjacent corner portions of the plurality of corner portions, a possibility that the another optical fiber passes through a region between the second guide portion and the first surface can be reduced.

In some embodiments, there is one first guide portion, and there are two second guide portions. The first surface includes four corner portions. The four corner portions are a first corner portion, a second corner portion, a third corner portion, and a fourth corner portion respectively. The first guide surface extends from the other end of the connecting portion in the extension direction to the first corner portion. One second guide surface extends from the other end of the connecting portion in the extension direction to the second corner portion and the third corner portion, and the other second guide surface extends from the other end of the connecting portion in the extension direction to the third corner portion and the fourth corner portion. In this embodiment, the another optical fiber located in the accommodating space between the head portion and the tail portion slides over the first corner portion via the first guide surface, slides over the second corner portion and the third corner portion via one second guide surface, and slides over the third corner portion and the fourth corner portion via the other second guide surface, which can prevent all the four corner portions of the first surface from snagging the another optical fiber. This can prevent the tail portion and the another optical fiber located in the accommodating space between the head portion and the tail portion from interfering with each other. In addition, one second guide surface extends from the other end of the connecting portion in the extension direction to the second corner portion and the third corner portion, the other second guide surface extends from the other end of the connecting portion in the extension direction to the third corner portion and the fourth corner portion, and the two second guide surfaces are connected at the third corner portion. This can prevent, via the two second guide surfaces, the another optical fiber from passing through a region between the second guide portion and the first surface, and can further reduce a probability that an optical fiber mistakenly passes through a region between the first guide portion and the first surface.

In some embodiments, the first guide portion and the two second guide portions are all of plate-like structures. The first guide portion includes a first side portion extending from the first corner portion to the second guide portion in an extension direction of the first surface. The second guide portion includes a second side portion, and the second side portion is connected to an edge defined by two adjacent corner portions of the first surface. In this embodiment, this can prevent a through hole from being formed between the first guide portion and the first surface, to prevent the another optical fiber from mistakenly passing through the through hole between the first guide portion and the first surface. This can prevent a through hole from being formed between the second guide portion and the first surface, to prevent the another optical fiber from mistakenly passing through the through hole between the second guide portion and the first surface.

In some embodiments, the guide surface is a planar surface, a concave curved surface, or a convex curved surface. In this embodiment, through smooth transition of the guide surface from the connecting portion to the corner portion of the first surface, the another optical fiber may disengage from the tail portion along the guide surface.

In some embodiments, the guide portion is of a post-like structure. One end of the guide portion is connected to the other end of the connecting portion in the extension direction, and the other end of the guide portion is connected to one corner portion.

In some embodiments, the label structural member further includes a fiber clip located between the head portion and the tail portion. The fiber clip is disposed on the connecting portion or the guide rail structure, and the fiber clip is configured to clamp an optical fiber connected to the optical fiber connector. In this embodiment, because the fiber clip is disposed on the connecting portion, the fiber clip may be used to clamp the optical fiber connected to the optical fiber connector. After the optical fiber is fastened, a gap between the optical fiber connected to the optical fiber connector and the connecting portion can be reduced, so that a probability that another optical fiber is inserted into the gap between the optical fiber connected to the optical fiber connector and the connecting portion is greatly reduced. In addition, after the fiber clip is disposed, and the optical fiber connected to the optical fiber connector is fastened to the fiber clip, a part of the accommodating space between the head portion and the tail portion can be occupied by using the fiber clip and the optical fiber connected to the optical fiber connector, and a probability that the another optical fiber passes through the accommodating space between the head portion and the tail portion can be reduced.

In some embodiments, the fiber clip is provided with a slot that extends in the extension direction through the connecting portion. A size of an opening of the slot may be greater than, less than, or equal to a diameter of the optical fiber connected to the optical fiber connector. In this embodiment, the optical fiber connected to the optical fiber connector may pass through the slot, to effectively fasten the optical fiber on the fiber clip through the slot. This ensures clamping stability.

In some embodiments, the fiber clip includes an inclined surface facing the head portion, and the inclined surface extends from the connecting portion to an end portion of the fiber clip away from the connecting portion. The inclined surface forms an obtuse angle with the extension direction of the connecting portion. In this embodiment, because the inclined surface forms the obtuse angle with the extension direction of the connecting portion, the another optical fiber located between the fiber clip and the head portion can easily leave a region between the fiber clip and the head portion from the inclined surface, without interfering with the fiber clip.

In some embodiments, the identification area is a surface of the tail portion away from the head portion. That is, in an axial direction or a length direction of the optical fiber connector, the identification area is disposed perpendicular to the axial direction of the optical fiber connector. In this embodiment, the identification area is located on a surface of the tail portion away from the head portion, and the identification area is disposed perpendicular to the axial direction of the optical fiber connector, which facilitates identification of label information on the identification area in the axial direction of the optical fiber connector.

In some embodiments, the tail portion is of a block-like structure with a plurality of surfaces, and at least two of the plurality of surfaces of the tail portion are identification areas. In this embodiment, when the optical fiber connector assembly is inserted into the adapter, the identification area on the tail portion may be scanned by using a camera device on a front side, or the identification area on the tail portion may be scanned by using a camera device disposed in another direction, so that application scenarios are diversified.

In some embodiments, an outer surface of the connecting portion is the identification area used to set label information. In this embodiment, an identification area on the connecting portion may be scanned by using camera devices in a plurality of directions, so that application scenarios are diversified.

In some embodiments, an outer surface of the head portion is an identification area used to set the label information. In this embodiment, an identification area on the head portion may be scanned by using camera devices in a plurality of directions, so that application scenarios are diversified.

According to a fourth aspect, an embodiment of this application provides a label structural member. The label structural member includes a head portion, a tail portion, and a guide rail structure and a connecting portion that are located between the head portion and the tail portion. The head portion is configured to be fastened to the optical fiber connector. The tail portion includes an identification area, and the identification area is configured to be provided with label information. One end of the connecting portion in an extension direction is connected to the head portion, and the guide rail structure is connected to the other end of the connecting portion in the extension direction and a first surface of the tail portion facing the head portion.

The guide rail structure includes a plurality of guide portions that extend from the other end of the connecting portion to an edge of the first surface, and the plurality of guide portions are spaced apart around the edge of the first surface. In this embodiment, there are the plurality of guide portions that extend from the other end of the connecting portion to the edge of the first surface, and the plurality of guide portions are spaced apart around the edge of the first surface, which can also prevent interference with another optical fiber when the edge of the first surface is a curve, to ensure that optical fiber connector assemblies arranged in high density can be properly and stably connected to adapters.

In some embodiments, the edge of the first surface is a curve. For example, the first surface may be in a circular shape, an elliptic shape, or the like.

In some embodiments, the first surface is in the circular shape, and a central angle corresponding to a position at which any two adjacent guide portions are connected to the edge of the first surface does not exceed 90 degrees.

In some embodiments, the guide rail structure includes a plurality of guide portions, and the plurality of guide portions extend from the other end of the connecting portion in the extension direction to the edge of the first surface. In this way, the another optical fiber located between the head portion and the tail portion can avoid interference with the tail portion, to ensure that the optical fiber connector assemblies arranged in high density can be properly and stably connected to the adapters.

In some embodiments, the guide portion includes a guide surface. The guide surface extends from the other end of the connecting portion in the extension direction to the edge of the first surface. In this embodiment, because the guide surface extends from the other end of the connecting portion in the extension direction to the edge of the first surface, the another optical fiber can disengage from the first surface from the corner portion of the first surface, and then disengage from the tail portion. This can prevent the tail portion and the another optical fiber located between the head portion and the tail portion from interfering with each other, to ensure that the optical fiber connector assemblies arranged in high density can be properly and stably connected to the adapters.

In some embodiments, the guide surface is a planar surface, a concave curved surface, or a convex curved surface. In this embodiment, through smooth transition of the guide surface from the connecting portion to the corner portion of the first surface, the another optical fiber may disengage from the tail portion along the guide surface.

In some embodiments, the label structural member further includes a fiber clip located between the head portion and the tail portion. The fiber clip is disposed on the connecting portion or the guide rail structure, and the fiber clip is configured to clamp an optical fiber connected to the optical fiber connector. In this embodiment, because the fiber clip is disposed on the connecting portion, the fiber clip may be used to clamp the optical fiber connected to the optical fiber connector. After the optical fiber is fastened, a gap between the optical fiber connected to the optical fiber connector and the connecting portion can be reduced, so that a probability that another optical fiber is inserted into the gap between the optical fiber connected to the optical fiber connector and the connecting portion is greatly reduced. In addition, after the fiber clip is disposed, and the optical fiber connected to the optical fiber connector is fastened to the fiber clip, a part of the accommodating space between the head portion and the tail portion can be occupied by using the fiber clip and the optical fiber connected to the optical fiber connector, and a probability that the another optical fiber passes through the accommodating space between the head portion and the tail portion can be reduced.

In some embodiments, the fiber clip is provided with a slot that extends in the extension direction through the connecting portion. A size of an opening of the slot may be greater than, less than, or equal to a diameter of the optical fiber connected to the optical fiber connector. In this embodiment, the optical fiber connected to the optical fiber connector may pass through the slot, to effectively fasten the optical fiber on the fiber clip through the slot. This ensures clamping stability.

In some embodiments, the fiber clip includes an inclined surface facing the head portion, and the inclined surface extends from the connecting portion to an end portion of the fiber clip away from the connecting portion. The inclined surface forms an obtuse angle with the extension direction of the connecting portion. In this embodiment, because the inclined surface forms the obtuse angle with the extension direction of the connecting portion, the another optical fiber located between the fiber clip and the head portion can easily leave a region between the fiber clip and the head portion from the inclined surface, without interfering with the fiber clip.

In some embodiments, the identification area is a surface of the tail portion away from the head portion. That is, in an axial direction or a length direction of the optical fiber connector, the identification area is disposed perpendicular to the axial direction of the connector. In this embodiment, the identification area is located on a surface of the tail portion away from the head portion, and the identification area is disposed perpendicular to the axial direction of the connector, which facilitates identification of label information on the identification area in the axial direction of the optical fiber connector.

In some embodiments, the identification area is a surface of the tail portion away from the head portion. That is, in an axial direction or a length direction of the optical fiber connector, the identification area is disposed perpendicular to the axial direction of the connector. In this embodiment, the identification area is located on a surface of the tail portion away from the head portion, and the identification area is disposed perpendicular to the axial direction of the connector, which facilitates identification of label information on the identification area in the axial direction of the optical fiber connector.

In some embodiments, the tail portion is of a block-like structure with a plurality of surfaces, and at least two of the plurality of surfaces of the tail portion are identification areas. In this embodiment, when the optical fiber connector assembly is inserted into the adapter, the identification area on the tail portion may be scanned by using a camera device on a front side, or the identification area on the tail portion may be scanned by using a camera device disposed in another direction, so that application scenarios are diversified.

In some embodiments, an outer surface of the connecting portion is the identification area used to set label information. In this embodiment, an identification area on the connecting portion may be scanned by using camera devices in a plurality of directions, so that application scenarios are diversified.

In some embodiments, an outer surface of the head portion is an identification area used to set the label information. In this embodiment, an identification area on the head portion may be scanned by using camera devices in a plurality of directions, so that application scenarios are diversified.

According to a fifth aspect, an embodiment of this application provides an optical fiber connector assembly. The optical fiber connector assembly includes an optical fiber connector and the label structural member according to any embodiment of the first aspect, any embodiment of the second aspect, any embodiment of the third aspect, or any embodiment of the fourth aspect, and a body of the optical fiber connector is accommodated in a receptacle of the head portion. The optical fiber connector and the label structural member may be of integrated structures. The body of the optical fiber connector and the head portion of the label structural member may be of the integrated structures.

According to a sixth aspect, an embodiment of this application provides a communication device, including:
a subrack, where a plurality of adapters are disposed on the subrack; and
the optical fiber connector assembly according to the fifth aspect, where the optical fiber connector assembly is configured to be inserted into the adapter.

### BRIEF DESCRIPTION OF DRAWINGS

To describe technical solutions in embodiments of this application or in the conventional technology more clearly, the following briefly describes the accompanying drawings used for describing embodiments or the prior art.
FIG. 1 is an example diagram of a structure of an embodiment of an optical network according to this application;
FIG. 2 is an example diagram of a structure of a network node of a communication device according to an embodiment of this application;
FIG. 2A is an example diagram of a clamping state between an optical fiber connector assembly and another optical fiber according to an embodiment of this application;
FIG. 3 is a diagram of a structure of an optical fiber connector assembly according to an embodiment of this application;
FIG. 4 is a diagram of a structure of a label structural member according to an embodiment of this application;
FIG. 5 is a diagram of the structure of the label structural member in FIG. 4 from another perspective;
FIG. 6 is a diagram of another structure of an optical fiber connector assembly according to an embodiment of this application;
FIG. 7 is a diagram of another structure of a label structural member according to an embodiment of this application;
FIG. 8 is a diagram of still another structure of a label structural member according to an embodiment of this application;
FIG. 9 is a diagram of yet another structure of a label structural member according to an embodiment of this application;
FIG. 10 is a diagram of yet another structure of a label structural member according to an embodiment of this application;
FIG. 11 is a diagram of yet another structure of a label structural member according to an embodiment of this application;
FIG. 12 is a diagram of yet another structure of a label structural member according to an embodiment of this application;
FIG. 13 is a diagram of yet another structure of a label structural member according to an embodiment of this application;
FIG. 14 is a diagram of yet another structure of a label structural member according to an embodiment of this application;
FIG. 15 is a diagram of yet another structure of a label structural member according to an embodiment of this application;
FIG. 16 is a diagram of yet another structure of a label structural member according to an embodiment of this application;
FIG. 17 is a diagram of yet another structure of a label structural member according to an embodiment of this application;
FIG. 18 is a diagram of yet another structure of an optical fiber connector assembly according to an embodiment of this application; and
FIG. 19 is a diagram of yet another structure of a label structural member according to an embodiment of this application.

### Reference signs:

101: optical line terminal; 102: optical distribution network; 103: optical network unit; 104: optical distribution frame unit; 105: fiber distribution terminal unit; 106: fiber access terminal unit; 120: accommodating space;
1000: communication device; 1: subrack; 2: adapter; 3: optical fiber connector assembly; 4: another optical fiber; 5: label structural member; 6: optical fiber connector; 61: plug; 62: intermediate member; 63: boot; 7: optical fiber connected to the optical fiber connector assembly;
A: horizontal direction of the subrack; B: vertical direction of the subrack; X: extension direction of a connecting portion; Y: width direction of a head portion;
10: head portion; 11: receptacle; 12: fastening frame; 13: cover;
20: tail portion; 21: identification area; 22: first surface; 23: corner portion; 231: first corner portion; 232: second corner portion; 233: third corner portion; 234: fourth corner portion;
30: connecting portion; 31: one end of the connecting portion in the extension direction; 32: the other end of the connecting portion in the extension direction; 33: first part: 34: second part; 341: hollow accommodating cavity;
40: guide rail structure; 41: guide portion; 411: guide surface; 42: first guide portion; 421: first guide surface; 422: first side portion; 43: second guide portion; 431: second guide surface; 432: second side portion; 44: accommodating space;
50: fiber clip; 51: slot; 52: inclined surface.

### DESCRIPTION OF EMBODIMENTS

The following first explains some terms in embodiments of this application.

In this specification, claims, and the foregoing accompanying drawings of embodiments of this application, the terms "first", "second", "third", "fourth", and the like are intended to distinguish between similar objects but do not necessarily indicate a specific order or sequence. It should be understood that data used in such a way is interchangeable in proper circumstances, so that embodiments of this application described herein can be implemented, for example, in an order other than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

In this specification, terms such as "perpendicular" and "parallel" are explained.

Perpendicular: "Perpendicular" defined in this application is not limited to an absolute perpendicular intersection (an included angle is 90 degrees) relationship. A non-absolute perpendicular intersection relationship caused by impact of factors such as an assembly tolerance, a design tolerance, and structural flatness is allowed. An error within a small angle range is allowed. For example, an intersection relationship within an assembly error range of 80 degrees to 100 degrees may be understood as a perpendicular relationship.

Parallel: "Parallel" defined in this application is not limited to absolute parallelism. The definition of "parallel" may be understood as basic parallelism. Cases of non-absolute parallelism caused by factors such as an assembly tolerance, a design tolerance, and a structural flatness are allowed. In these cases, a sliding mating portion and a first door plate are not absolutely parallel. However, in this application, the sliding mating portion and the first door plate in these cases are also defined as being parallel.

This application provides a label structural member. Based on the label structural member provided in this application, an optical fiber connector assembly can be accurately and efficiently identified, thereby effectively ensuring that the optical fiber connector assembly can accurately transmit an optical signal. To better understand the label structural member provided in this application, the following first describes an optical network system to which an optical fiber connector assembly using the label structural member is applied.

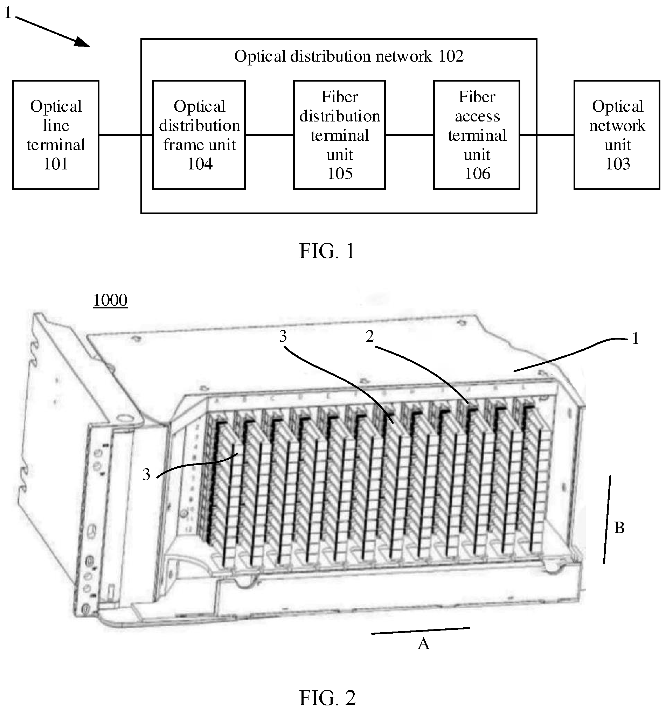

As shown in FIG. 1, FIG. 1 is an example diagram of a structure of an embodiment of the optical network according to this application. It can be learned from FIG. 1 that this application is described by using an example in which the optical fiber connector assembly is applied to a passive optical network (passive optical network, PON) system.

The passive optical network system includes an optical line terminal 101 (optical line terminal, OLT). The optical line terminal 101 is configured to provide a network side interface for an optical access network (optical access network, OAN). The optical line terminal 101 is connected to an upper-layer network side device (such as a switch or a router), and a lower layer is connected to one or more optical distribution networks 102 (optical distribution network, ODN).

The optical distribution network 102 includes a passive optical splitter used for optical power distribution, and a feeder optical fiber connected between the passive optical splitter and the optical line terminal 101. The feeder optical fiber is configured to implement transmission of an optical signal between the optical line terminal 101 and the optical distribution network 102. The optical distribution network 102 further includes a branch optical fiber connected between the passive optical splitter and an optical network unit 103 (optical network unit, ONU). The branch optical fiber is configured to implement transmission of an optical signal between the optical distribution network 102 and the optical network unit 103.

When the optical line terminal 101 needs to transmit a downlink optical signal to the optical network unit 103, the optical distribution network 102 transmits the downlink optical signal from the optical line terminal 101 to each optical network unit 103 via the passive optical splitter. Similarly, when the optical network unit 103 needs to transmit an uplink optical signal to the optical line terminal 101, the optical distribution network 102 aggregates the uplink optical signal from the optical network unit 103 and transmits an aggregated uplink optical signal to the optical line terminal 101.

The optical network unit 103 provides a user side interface for the optical access network, and is connected to the optical distribution network 102. If the optical network unit 103 also provides a user port function, for example, provides an Ethernet (Ethernet) user port or a plain old telephone service (plain old telephone service, POTS) user port, the optical network unit 103 is referred to as an optical network termination (optical network termination, ONT). In this application, the optical network unit 103 or the optical network termination is collectively referred to as the optical network unit 103.

To implement optical signal transmission, an optical fiber output from the optical line terminal 101 is connected to an optical distribution frame (optical distribution frame, ODF) unit included in the optical distribution network 102. The optical distribution frame unit 104 may include one or more optical distribution frames.

Through distribution by the optical distribution frame unit 104, the output optical fiber is connected to a fiber distribution terminal (fiber distribution terminal, FDT) unit, and the fiber distribution terminal unit 105 may include one or more fiber distribution terminals.

The fiber distribution terminal unit 105 is configured to perform secondary distribution on optical fibers. A management range of one fiber distribution terminal unit 105 may be a residential compound, a street, or a building, and a quantity of optical fiber connector assemblies connected to the fiber distribution terminal unit 105 may be selected based on a quantity of users who need to be managed by the fiber distribution terminal unit 105.

The fiber distribution terminal unit 105 is connected to a fiber access terminal (fiber access terminal, FAT) unit through an optical fiber, and the fiber access terminal unit 106 includes one or more fiber access terminals.

The fiber access terminal unit 106 is connected to the optical network unit 103. The fiber access terminal unit 106 is configured to be connected to a user access point of a drop optical fiber. A segment of the drop optical fiber is an optical fiber from the fiber access terminal unit 106 to a user's premises.

The optical fiber connector assembly provided in this application may be connected in scenarios such as a jumper fiber or a pigtail. In this example, an example in which the optical fiber connector assembly is applied to two sides of the jumper fiber is used for description, that is, two ends of one jumper fiber are respectively connected to two optical fiber connector assemblies. The jumper fiber may be used in the optical distribution frame unit 104, the fiber distribution terminal unit 105, or the fiber access terminal unit 106. This is not specifically limited.

For example, the jumper fiber is connected in any of the following scenarios:
connected between two interconnected optical distribution frames included in the optical distribution frame unit 104, connected between different adapters of a same optical distribution frame, connected between the optical line terminal 101 and the optical distribution frame, connected between two interconnected fiber distribution terminals included in the fiber distribution terminal unit 105, connected between different adapters of a same fiber distribution terminal, connected between two interconnected fiber access terminals included in the fiber access terminal unit 106, and connected between the fiber access terminal unit 106 and an optical fiber access terminal box (access terminal box, ATB) between or between the fiber access terminal unit 106 and the optical network unit 103.

It should be specified that embodiments shown in this application are merely intended for describing the technical solutions of this application, but not for limiting this application. Although this application is described in detail with reference to the following embodiments, a person of ordinary skill in the art should understand that they may still make modifications to the technical solutions described in the following embodiments or make equivalent replacements to some technical features thereof, without departing from the scope of the technical solutions of embodiments of this application.

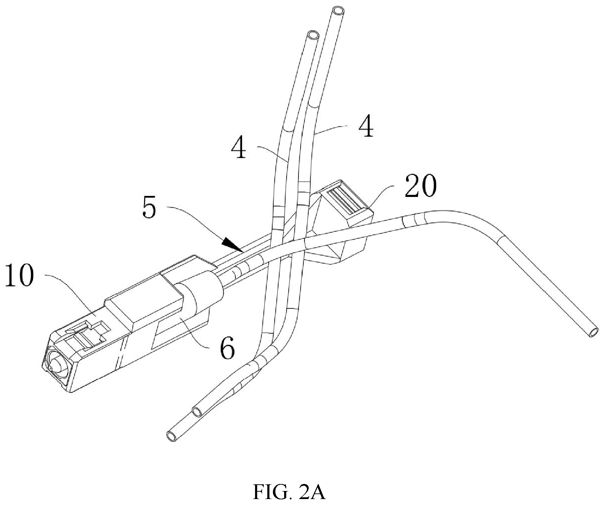

FIG. 2 is an example diagram of a structure of a network node of a communication device 1000 according to an embodiment of this application. The network node of the communication device 1000 in this embodiment may be the optical line terminal 101, the optical network unit 103, the optical distribution frame, the fiber distribution terminal, or the fiber access terminal. A specific type of the network node of the communication device 1000 is not limited in this embodiment.

The communication device 1000 includes a subrack 1. A plurality of adapters 2 are fastened on the subrack 1. The adapter 2 is configured to receive and fasten an optical fiber connector assembly 3.

Specifically, an adapter 2 included in the subrack 1 is used as an example. The adapter 2 has a plug interface, and the plug interface is used to receive and fasten the optical fiber connector assembly 3. In a state in which the optical fiber connector assembly 3 is inserted into the adapter 2, interaction of an optical signal may be performed between the optical fiber connector assembly 3 and the network node of the communication device 1000.

The subrack 1 shown in this embodiment may be a high-density subrack 1. The high-density subrack 1 means that a plurality of optical fiber connector assemblies 3 are inserted in a unit region of a panel of the subrack 1, and a gap between adjacent optical fiber connector assemblies 3 is very small. The following describes a layout of the high-density subrack 1.

The plurality of adapters 2 included in the subrack 1 form an array of adapters 2. The adapter array 2 includes N rows of adapters 2 arranged in a horizontal direction of the subrack 1, and the adapter array 2 further includes M columns of adapters 2 arranged in a vertical direction of the subrack 1. The horizontal direction and the vertical direction are perpendicular to each other, and specific values of M and N are not limited in this embodiment.

It can be seen that, in the high-density subrack 1, the gap between adjacent optical fiber connectors is very small, and a large quantity of optical fiber connector assemblies 3 are inserted in the subrack 1, which causes a large quantity of optical fibers connected to the large quantity of optical fiber connector assemblies 3 to interfere with each other. With reference to FIG. 2A, there is a large possibility that another optical fiber 4 passes between a head portion 10 and a tail portion 20 of a label structural member 5 of the optical fiber connector assembly 3. Because the tail portion 20 of the label structural member 5 interferes with the another optical fiber 4, when the optical fiber connector assembly 3 is pulled out of the adapter 2, another optical fiber connector assembly 3 becomes loose or is indirectly pulled out, and normal optical signal interaction with the optical fiber connector assembly 3 and with the adapter 2 cannot be performed.

The following describes a specific structure of the optical fiber connector assembly 3 in this embodiment.

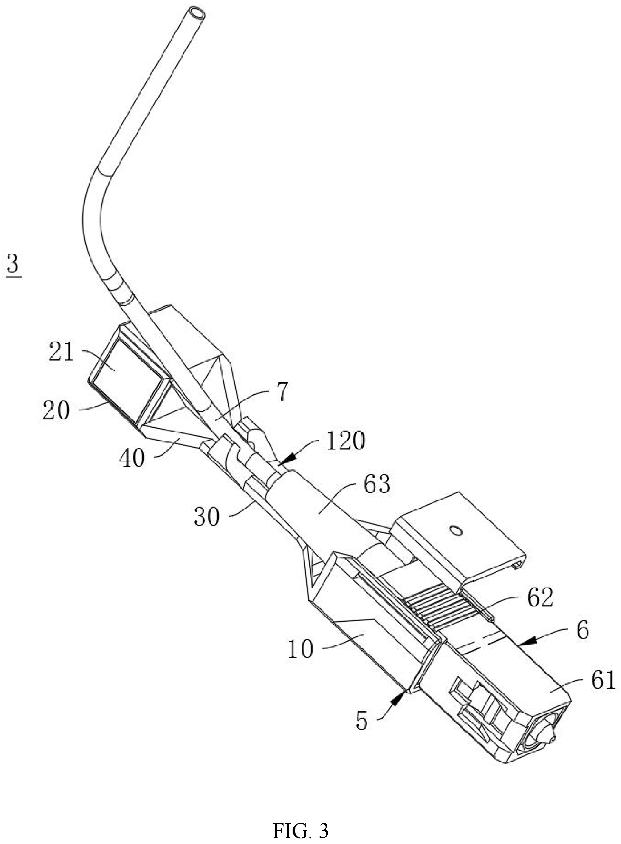

FIG. 3 is a diagram of the structure of the optical fiber connector assembly 3 according to an embodiment of this application. The optical fiber connector assembly 3 in the embodiment in FIG. 3 may be used in the network node of the subrack-based communication device 1000 in FIG. 2, and ports of the network node of the communication device 1000 are arranged in a plurality of rows and a plurality of columns. In addition, the optical fiber connector assembly 3 in the embodiment in FIG. 3 may alternatively be a network node used in the communication device 1000 whose ports are arranged in a single row or a single column.

With reference to FIG. 3, the optical fiber connector assembly 3 includes an optical fiber connector 6 and a label structural member 5. The optical fiber connector 6 is connected to an adapter 2 in the network node of the communication device 1000, to implement interaction of an optical signal. The label structural member 5 is connected to the optical fiber connector 6. Because label information is set on the label structural member 5, corresponding information of a port can be accurately identified, and digital management of port resources can be implemented.

In some embodiments, the optical fiber connector 6 includes a plug 61, an intermediate member 62, and a boot 63. The intermediate member 62 is connected between the plug 61 and the boot 63, and the boot 63 is connected to an optical fiber. The optical fiber is connected to an optical fiber located inside the optical fiber connector 6, to transmit an optical signal. The plug 61 is configured to be inserted into the adapter 2, to implement a connection between the optical fiber connector 6 and the adapter 2.

A type of the optical fiber connector 6 in this embodiment is not limited. For example, the type of the optical fiber connector 6 in this embodiment is any one of the following: an optical fiber connector of a ferrule connector (ferrule connector, FC) type, an optical fiber connector of a subscriber connector (subscriber connector, SC) type, an optical fiber connector of a lucent connector (lucent connector, LC) type, an optical fiber connector of a straight tip (straight tip, ST) type, an optical fiber connector of a fiber distributed data interface (fiber distributed data interface, FDDI) type, or the like.

In some embodiments, the label structural member 5 includes a head portion 10, a tail portion 20, and a connecting portion 30 and a guide rail structure 40 that are located between the head portion 10 and the tail portion 20. The connecting portion 30 has two ends of the connecting portion 30 in an extension direction X . One end 31 of the connecting portion 30 is connected to the head portion 10 of the connecting portion 30 in the extension direction X . The other end 32 of the connecting portion 30 is connected to the tail portion 20 via the guide rail structure 40 of the connecting portion 30 in the extension direction X . That is, the guide rail structure 40 is connected between the other end 32 of the connecting portion 30 in the extension direction X and the tail portion 20.

It may be understood that, in some implementations, the connecting portion 30 is approximately in a shape of a straight elongated strip, and the extension direction X of the connecting portion 30 is a length direction of the connecting portion 30. The head portion 10, the connecting portion 30, the guide rail structure 40, and the tail portion 20 are sequentially connected of the connecting portion 30 in the extension direction X . In some other implementations, the connecting portion 30 is in an elongated strip shape with a specific radian. In this case, the extension direction is an extension track of the connecting portion 30.

In some implementations, the head portion 10 is connected to the optical fiber connector 6. For example, the head portion 10 is connected to the plug 61 of the optical fiber connector 6. It may be understood that, in some other implementations, the label structural member 5 may alternatively be connected to the intermediate member 62 and the boot 63 of the optical fiber connector 6.

In some implementations, the head portion 10 is provided with a receptacle 11, and the plug 61 is disposed in the receptacle 11.

In some implementations, there is an accommodating space 120 between the head portion 10 and the tail portion 20, the plug 61 of the optical fiber connector 6 is inserted into the receptacle 11, and the intermediate member 62 and the boot 63 of the optical fiber connector 6 are located in the accommodating space 120 between the head portion 10 and the tail portion 20. It may be understood that, in some implementations, the plug 61 and the intermediate member 62 of the optical fiber connector 6 may alternatively be inserted into the receptacle 11, and the boot 63 is disposed in the accommodating space 120 between the head portion 10 and the tail portion 20. The intermediate member 62 and/or the boot 63 of the connector are disposed in the accommodating space 120, which can effectively reduce a size of the optical fiber connector assembly 3, and facilitates miniaturization of the optical fiber connector assembly 3.

In some implementations, the tail portion 20 includes an identification area 21. The identification area 21 is configured to be provided with label information to facilitate identification.

It may be understood that, for the label information shown on the identification area 21 in this embodiment, the label information may be set on the identification area 21 when the optical fiber connector assembly 3 is delivered, or the label information may be set on the identification area 21 when the optical fiber connector assembly 3 is used subsequently.

In this embodiment, the label information that is set on the identification area 21 and used to identify the optical fiber connector 6 is not limited, as long as the label information can uniquely identify the optical fiber connector 6. That is, different label information is used to identify different optical fiber connectors 6. For example, the label information may be a two-dimensional code, a unique identifier, a bar code, or digital text information used to uniquely identify the optical fiber connector 6.

It may be understood that, because there is the accommodating space 120 between the head portion 10 and the tail portion 20, and optical fiber connector assemblies 3 are arranged in high density in the subrack 1, another optical fiber 4 connected to another optical fiber connector assembly 3 may intrude into the accommodating space 120 between the head portion 10 and the tail portion 20. The optical fiber connector assembly 3 in this embodiment of this application can effectively avoid interference of the another optical fiber 4 located in the accommodating space 120 between the head portion 10 and the tail portion 20 with the optical fiber connector assembly 3.

In some implementations, because the guide rail structure 40 is located between the tail portion 20 and the other end 32 of the connecting portion 30 in the extension direction X , the guide rail structure 40 allows the another optical fiber 4 in the accommodating space 120 between the head portion 10 and the tail portion 20 to slide along the guide rail structure 40 and disengage from the tail portion 20. In this way, clamping of the another optical fiber 4 by the tail portion 20 can be avoided, so that the another optical fiber 4 and the tail portion 20 do not interfere with each other, and connections between some optical fiber connector assemblies 3 and adapters 2 are not loose. For example, after the guide rail structure 40 extends from the other end 32 of the connecting portion 30 in the extension direction X to a plurality of corner portions 23 of a first surface 22, a smoothly transitional surface from the connecting portion 30 to the corner portion 23 of the first surface 22 is formed on the guide rail structure 40. The smoothly transitional surfaces can prevent the another optical fiber 4 and the tail portion 20 from interfering with each other. Specifically, analysis may be performed by using an embodiment of the label structural member 5 in the following embodiments.

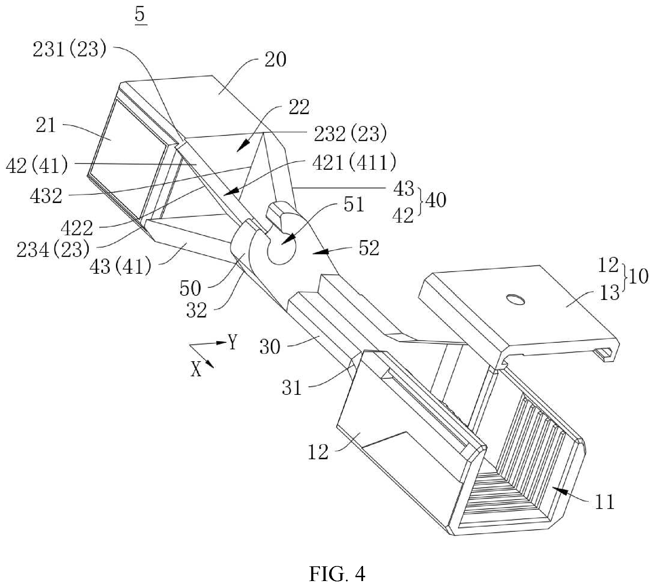

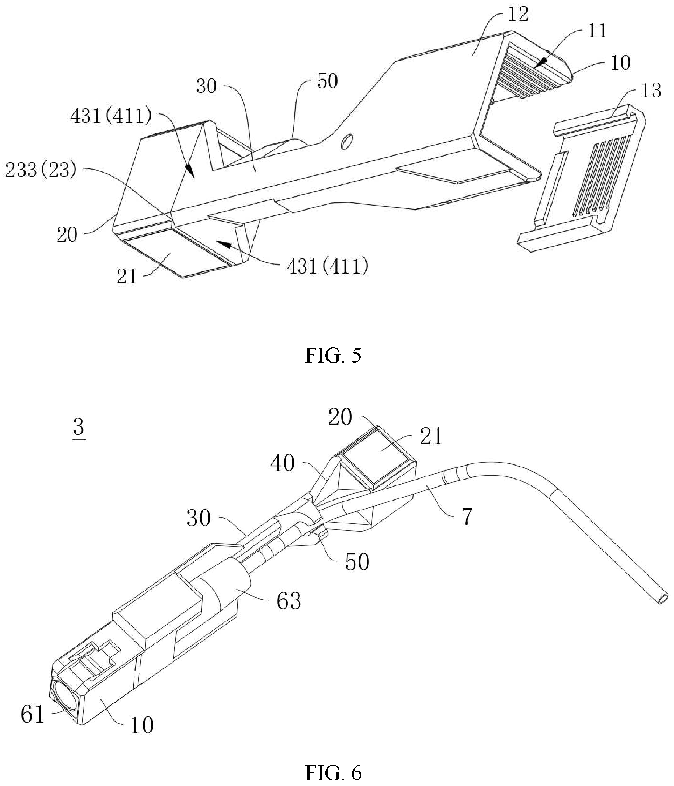

FIG. 4 is a diagram of a structure of the label structural member 5 according to an embodiment of this application. FIG. 5 is a diagram of the structure of the label structural member 5 in FIG. 4 from another perspective. The label structural member 5 in the embodiment in FIG. 4 may be applied to the optical fiber connector assembly 3 in the embodiment in FIG. 3, and may also be used together with an optical fiber connector of another type.

With reference to FIG. 4 and FIG. 5, in some embodiments, the label structural member 5 includes a head portion 10, a connecting portion 30, a guide rail structure 40, and a tail portion 20 that are sequentially connected of the connecting portion 30 in an extension direction X .

A surface of the tail portion 20 facing the head portion 10 is a first surface 22. The first surface 22 of the tail portion 20 facing the head portion 10 is a surface connected to the guide rail structure 40. That is, the guide rail structure 40 is connected to the other end 32 of the connecting portion 30 in the extension direction X and the first surface 22 of the tail portion 20.

The first surface 22 has a plurality of corner portions 23 formed by edges of the first surface 22, and each corner portion 23 may snag another optical fiber 4 located between the head portion 10 and the tail portion 20 (with reference to FIG. 2A). The guide rail structure 40 in this embodiment of this application can prevent each corner portion 23 of the first surface 22 from snagging the another optical fiber 4 located between the head portion 10 and the tail portion 20.

In some implementations, the guide rail structure 40 extends from the connecting portion 30 to the plurality of corner portions 23 of the first surface 22, that is, the guide rail structure 40 extends from the other end 32 of the connecting portion 30 in the extension direction X to each corner portion 23 of the first surface 22. In this way, the another optical fiber 4 can disengage from any corner portion 23 via the guide rail structure 40, and the another optical fiber 4 can disengage from the first surface 22, which can prevent the first surface 22 and the another optical fiber 4 from interfering with each other. In this way, when optical fiber connector assemblies 3 are inserted into a subrack 1 in high density, it is ensured that the optical fiber and the optical fiber connector assembly 3 do not interfere with each other, and it is ensured that the optical fiber connector assemblies 3 arranged in high density can be properly and stably connected to adapters 2.

It should be noted that the "corner portion 23" in this embodiment of this application is approximately an angle. For example, even if some angles are rounded, the angles are still "corner portions 23" specified in this application. In this embodiment of this application, the "corner portion 23" is formed by the edges of the first surface 22, is a part at which two adjacent edges of the first surface 22 intersect, and may snag the another optical fiber 4.

It may be understood that the guide rail structure 40 may have various structures and shapes, as long as the another optical fiber 4 located between the head portion 10 and the tail portion 20 can disengage from the tail portion 20 along the guide rail structure 40.

In some implementations, the guide rail structure 40 includes a plurality of guide portions 41. The plurality of guide portions 41 extend from the connecting portion 30 to the first surface 22. Specifically, the plurality of guide portions 41 extend from the other end 32 of the connecting portion 30 in the extension direction X to the plurality of corner portions 23 of the first surface 22, and each corner portion 23 is connected to its corresponding guide portion 41. Because the plurality of guide portions 41 extend from the other end 32 of the connecting portion 30 in the extension direction X to the plurality of corner portions 23, the another optical fiber 4 located between the head portion 10 and the tail portion 20 can smoothly disengage from the plurality of corner portions 23 of the first surface 22 via the plurality of guide portions 41. In addition, because each corner portion 23 is connected to its corresponding guide portion 41, each corner portion 23 can be guided by the respective guide portion 41, to prevent the corner portion 23 from clamping the another optical fiber 4. In this way, the another optical fiber 4 located between the head portion 10 and the tail portion 20 can avoid interference with the tail portion 20, to ensure that optical fiber connector assemblies 3 arranged in high density can be properly and stably connected to adapters 2. In addition, because the guide rail structure 40 in this embodiment is formed by the plurality of guide portions 41, the guide portions 41 may be properly arranged based on positions of the plurality of corner portions 23 of the first surface 22, thereby improving design diversity of the guide portions 41.

In some implementations, some of the plurality of guide portions 41 may extend from the other end 32 of the connecting portion 30 in the extension direction X to one corner portion 23 of the first surface 22.

In some implementations, some of the plurality of guide portions 41 may extend from the other end 32 of the connecting portion 30 in the extension direction X to the plurality of corner portions 23 of the first surface 22, for example, may extend from the other end 32 of the connecting portion 30 in the extension direction X to two, three, or four corner portions 23 of the first surface 22.

With reference to FIG. 4 and FIG. 5, in some embodiments, each guide portion 41 includes a guide surface 411, and the guide portion 41 guides, via the guide surface 411, the another optical fiber 4 located between the head portion 10 and the tail portion 20, to guide the optical fiber to disengage from the first surface 22. It should be noted that the guide surface 411 is a surface, on the guide portion 41, that can be in contact with the another optical fiber 4 between the head portion 10 and the tail portion 20. For example, a surface of a side of the guide portion 41 away from the first surface 22 is the guide surface 411 in this embodiment.

In some implementations, the guide surface 411 extends from the other end 32 of the connecting portion 30 in the extension direction X to at least one of the plurality of corner portions 23. It may be understood that, in some implementations, the guide surface 411 extends from the other end 32 of the connecting portion 30 in the extension direction X to one of the plurality of corner portions 23. In some implementations, the guide surface 411 extends from the other end 32 of the connecting portion 30 in the extension direction X to multiple corner portions 23 of the plurality of corner portions 23. Because the guide surface 411 extends from the other end 32 of the connecting portion 30 in the extension direction X to the at least one of the plurality of corner portions 23, the another optical fiber 4 located between the head portion 10 and the tail portion 20 can slide along the guide surface 411 from the connecting portion 30 to the corner portion 23 of the first surface 22, then disengage from the first surface 22 from the corner portion 23 of the first surface 22, and finally disengage from the tail portion 20. This can prevent the tail portion 20 and the another optical fiber 4 located between the head portion 10 and the tail portion 20 from interfering with each other, to ensure that the optical fiber connector assemblies 3 arranged in high density can be properly and stably connected to the adapters 2.

In some implementations, structures of the plurality of guide portions 41 are different. To distinguish between different guide portions 41, a guide surface 411, of one of the plurality of corner portions 23, that extends from the other end 32 of the connecting portion 30 in the extension direction X to the plurality of corner portions 23 is disposed as a first guide surface 421, and a guide portion 41 including the first guide surface 421 is a first guide portion 42. A guide surface 411, of two adjacent corner portions of the plurality of corner portions 23, that extends from the other end 32 of the connecting portion 30 in the extension direction X to the plurality of corner portions 23 is disposed as a second guide surface 431, and a guide portion 41 including the second guide surface 431 is a second guide portion 43. The label structural member 5 in this embodiment of this application may be provided with corresponding quantities of first guide portions 42 and second guide portions 43 based on a quantity of corner portions 23 of the first surface 22 and a shape of the first surface 22.

In some implementations, the plurality of guide portions 41 include at least one first guide portion 42 and at least one second guide portion 43. The first guide surface 421 extends from the other end 32 of the connecting portion 30 in the extension direction X to one of the plurality of corner portions 23, and the second guide surface 431 extends from the other end 32 of the connecting portion 30 in the extension direction X to two adjacent corner portions 23 of the plurality of corner portions 23. For example, in some implementations, one first guide portion 42 and two second guide portions 43 may be disposed. For another example, in some implementations, two first guide portions 42 and two second guide portions 43 may alternatively be disposed. For another example, in some implementations, a plurality of first guide portions 42 may alternatively be disposed, and no second guide portion 43 is disposed. Alternatively, a plurality of second guide portions 43 may be disposed, and no first guide portion 42 is disposed. In this implementation, the first guide portion 42 and the second guide wire portion cooperate with the first surface 22 of the tail portion 20, so that design diversity of the tail portion 20 of the label structural member 5 in this embodiment of this application can be improved.

In some implementations, the first surface 22 includes four corner portions 23. For ease of description, the four corner portions 23 are: a first corner portion 231, a second corner portion 232, a third corner portion 233, and a fourth corner portion 234. The guide rail structure 40 in this implementation includes one first guide portion 42 and two second guide portions 43. That is, in this implementation, one first guide surface 421 and two second guide surfaces 431 are used to enable the another optical fiber 4 located in an accommodating space 120 between the head portion 10 and the tail portion 20 to disengage from the first surface 22. Specifically, the first guide surface 421 extends from the other end 32 of the connecting portion 30 in the extension direction X to the first corner portion 231. One second guide surface 431 extends from the other end 32 of the connecting portion 30 in the extension direction X to the second corner portion 232 and the third corner portion 233, and the other second guide surface 431 extends from the other end 32 of the connecting portion 30 in the extension direction X to the third corner portion 233 and the fourth corner portion 234. In this implementation, the another optical fiber 4 located in the accommodating space 120 between the head portion 10 and the tail portion 20 slides over the first corner portion 231 via the first guide surface 421, slides over the second corner portion 232 and the third corner portion 233 via one second guide surface 431, and slides over the third corner portion 233 and the fourth corner portion 234 via the other second guide surface 431, which can prevent all the four corner portions 23 of the first surface 22 from snagging the another optical fiber 4. This can prevent the tail portion 20 and the another optical fiber 4 located in the accommodating space 120 between the head portion 10 and the tail portion 20 from interfering with each other. In addition, one second guide surface 431 extends from the other end 32 of the connecting portion 30 in the extension direction X to the second corner portion 232 and the third corner portion 233, the other second guide surface 431 extends from the other end 32 of the connecting portion 30 in the extension direction X to the third corner portion 233 and the fourth corner portion 234, and the two second guide surfaces 431 are connected at the third corner portion 233. This can prevent, via the two second guide surfaces 431, the another optical fiber 4 from passing through a region between the second guide portion 43 and the first surface 22, and can further reduce a probability that an optical fiber mistakenly passes through a region between the first guide portion 42 and the first surface 22.

In some implementations, the second guide portion 43 is approximately of a plate-like structure, and the second guide portion 43 includes a second side portion 432 connected to the first surface 22. The second side portion 432 is connected to an edge defined by two adjacent corner portions 23 of the first surface 22. For example, the second side portion 432 is connected to an edge defined by the second corner portion 232 and the third corner portion 233 on the first surface 22. This can prevent a through hole from being formed between the second guide portion 43 and the first surface 22, to prevent the another optical fiber 4 from mistakenly passing through the through hole between the second guide portion 43 and the first surface 22.

In some implementations, the second guide portion 43 is of a triangular plate-like structure, and three corners of the second guide portion 43 are respectively connected to the other end 32 of the connecting portion 30 in the extension direction X and two adjacent corner portions 23.

In some implementations, the first guide portion 42 is approximately of the plate-like structure, and the first guide portion 42 includes a first side portion 422. The first side portion 422 extends from one corner portion 23 of the first surface 22 to the second guide portion 43, and the first side portion 422 is attached to the first surface 22. In this way, this can prevent a through hole from being formed between the first guide portion 42 and the first surface 22, to prevent the another optical fiber 4 from mistakenly passing through the through hole between the first guide portion 42 and the first surface 22.

It may be understood that, in some other implementations, the first guide portion 42 may not be of the plate-like structure, or may be of a post-like structure or another structure.

In some implementations, the guide surface 411 may be a planar surface. In some other implementations, the guide surface 411 may alternatively be a concave curved surface or a convex curved surface, and the guide surface 411 may alternatively be any combination of a planar surface, a concave curved surface, and a convex curved surface, for example, a combination of a plurality of planar surfaces, or the planar surface and a curved surface. Through smooth transition of the guide surface 411 from the connecting portion 30 to the corner portion 23 of the first surface 22, the another optical fiber 4 may disengage from the tail portion 20 along the guide surface 411.

For example, in some implementations, the first guide surface 421 is a planar surface.

In some implementations, the first surface 22 is in a square shape when the first surface 22 includes four corner portions 23. Certainly, in some other implementations, the first surface 22 may alternatively be in a shape such as a diamond shape, a rectangle shape, or a trapezoid shape. In addition, in some other implementations, the first surface 22 may alternatively include three corner portions 23, five corner portions 23, six corner portions 23, or more corner portions 23.

With reference to FIG. 4 and FIG. 5, in some embodiments, the label structural member 5 further includes a fiber clip 50 located between the head portion 10 and the tail portion 20. The fiber clip 50 is disposed on the connecting portion 30, and the fiber clip 50 is configured to clamp an optical fiber 7 connected to the optical fiber connector 6. In this embodiment, because the fiber clip 50 is disposed on the connecting portion 30, the fiber clip 50 may be used to clamp the optical fiber 7 connected to the optical fiber connector 6. After the optical fiber is fastened, a gap between the optical fiber 7 connected to the optical fiber connector 6 and the connecting portion 30 can be reduced, so that a probability that the another optical fiber 4 is inserted into the gap between the optical fiber 7 connected to the optical fiber connector 6 and the connecting portion 30 is greatly reduced. In addition, after the fiber clip 50 is disposed, and the optical fiber 7 connected to the optical fiber connector 6 is fastened to the fiber clip 50, a part of the accommodating space 120 between the head portion 10 and the tail portion 20 can be occupied by using the fiber clip 50 and the optical fiber 7 connected to the optical fiber connector 6, and a probability that the another optical fiber 4 passes through the accommodating space 120 between the head portion 10 and the tail portion 20 can be reduced. In combination with the guide rail structure 40, a probability that the another optical fiber 4 gets snagged on the tail portion 20 can be greatly reduced, to ensure that the optical fiber connector assembly 3 is stably connected to the adapter 2.

It may be understood that, on a premise of ensuring that the optical fiber 7 connected to the optical fiber connector 6 can be smoothly bent, a position of the fiber clip 50 may be any position of the connecting portion 30 in the extension direction X . For example, in some implementations, the fiber clip 50 is located at the other end 32 of the connecting portion 30 in the extension direction X , so that a distance between the fiber clip 50 and the first surface 22 of the tail portion 20 can be reduced as much as possible. Therefore, a probability that the another optical fiber 4 enters a region between the fiber clip 50 and the first surface 22 can be effectively reduced, and a quantity of other optical fibers 4 that may interfere with the tail portion 20 of the label structural member 5 can be effectively reduced, and a probability that the another optical fiber 4 and the tail portion 20 of the label structural member 5 interfere with each other is also reduced. This ensures that the optical fiber connector assembly 3 is stably connected to the adapter 2.

In some implementations, the fiber clip 50 is provided with a slot 51 that extends in the extension direction X through the connecting portion 30. The optical fiber 7 connected to the optical fiber connector 6 may pass through the slot 51, to effectively fasten the optical fiber 7 on the fiber clip 50 through the slot 51. This ensures clamping stability.

In some implementations, a size of an opening of the slot 51 is less than a diameter of the optical fiber 7 connected to the optical fiber connector 6. Because the size of the opening of the slot 51 is smaller than the diameter of the optical fiber 7 connected to the optical fiber connector 6, the optical fiber 7 connected to the optical fiber connector 6 can be effectively fastened on the fiber clip 50. This ensures clamping stability.

It may be understood that the size of the opening of the slot 51 may alternatively be greater than or equal to the diameter of the optical fiber 7 connected to the optical fiber connector 6, as long as the slot 51 can limit the optical fiber 7.

In some implementations, the fiber clip 50 includes an inclined surface 52 facing the head portion 10, and the inclined surface 52 extends from the connecting portion 30 to an end portion of the fiber clip 50 away from the connecting portion 30. The another optical fiber 4 located between the fiber clip 50 and the head portion 10 can be effectively guided, via the inclined surface 52, outside a region in which the fiber clip 50 and the head portion 10 are located. This can prevent the fiber clip 50 and the another optical fiber 4 from interfering with each other, to ensure that the optical fiber connector assembly 3 is stably connected to the adapter 2.

In some implementations, the inclined surface 52 is approximately disposed at an obtuse angle 23 with the extension direction X of the connecting portion 30. Because the inclined surface 52 forms the obtuse angle 23 with the extension direction X of the connecting portion 30, the another optical fiber 4 located between the fiber clip 50 and the head portion 10 can easily leave a region between the fiber clip 50 and the head portion 10 from the inclined surface 52, without interfering with the fiber clip 50.

It may be understood that the inclined surface 52 may be a planar surface. In some other implementations, the inclined surface 52 may also be a curved surface, for example, a concave curved surface or a convex curved surface.

It may be understood that a structure of the fiber clip 50 may alternatively be another structure other than that in the foregoing implementation. For example, the fiber clip 50 may alternatively be of a movable clamp structure. For another example, the fiber clip 50 may alternatively be provided with a through hole extending of the connecting portion 30 in the extension direction X , and an optical fiber passes through the through hole, to fasten the optical fiber. Any fiber clip 50 of any structure that can fasten the optical fiber 7 connected to the optical fiber connector 6 falls within the protection scope of this application.

With reference to FIG. 4 and FIG. 5, in some embodiments, the head portion 10 includes a fastening frame 12 and a cover 13 that is detachably fastened to the fastening frame 12. The fastening frame 12 is provided with a receptacle 11, and the cover 13 is detachably fastened to an opening of the receptacle 11. The foregoing optical fiber connector 6 may be accommodated by using the receptacle 11, for example, the plug 61 or the intermediate member 62 of the optical fiber connector 6 is accommodated. After the cover 13 is fastened on the fastening frame 12, the opening of the receptacle 11 may be covered by the cover 13, and the optical fiber connector 6 located in the receptacle 11 is fastened in the receptacle 11. In addition, detaching the cover 13 allows the optical fiber connector 6 to be easily taken out of the receptacle 11. In this way, the label structural member 5 in this embodiment can facilitate replacement or maintenance of the clamped optical fiber connector 6.

With reference to FIG. 4 and FIG. 5, in some embodiments, the identification area 21 is a surface of a side of the tail portion 20 away from the head portion 10. That is, in an axial direction or a length direction of the optical fiber connector 6, the identification area 21 is disposed perpendicular to the axial direction of the optical fiber connector 6. In this embodiment, the identification area 21 is located on a surface of the tail portion 20 away from the head portion 10, and the identification area 21 is disposed perpendicular to the axial direction of the optical fiber connector 6, which facilitates identification of label information on the identification area 21 in the axial direction of the optical fiber connector 6. Therefore, after a large quantity of optical fiber connector assemblies 3 are plugged into the adapters 2 on the subrack 1 in a high-density arrangement manner, identification areas 21 may be uniformly oriented toward a same direction, to facilitate unified scanning.

In some implementations, the tail portion 20 is of a block-like structure with a plurality of surfaces, and at least two of the plurality of surfaces of the tail portion 20 are identification areas 21. By using the at least two identification areas 21, the identification area 21 can be effectively scanned in a plurality of application scenarios. For example, for a part of drawer-type optical distribution frames, a front panel of the optical distribution frame is of a closed structure and cannot be opened. When the identification area 21 cannot be seen from a front side, the identification area 21 can still be scanned from another direction.

In some implementations, the tail portion 20 is approximately of a cuboid structure. A surface facing the head portion 10 is the first surface 22, and other surfaces of the tail portion 20 may be disposed as identification areas 21. For example, in some implementations, in a width direction Y (for example, a width direction shown in the figure) of the head portion 10, two opposite surfaces of the tail portion 20 are disposed as the identification areas 21, and a surface of the tail portion 20 that is opposite to the first surface 22, that is, a surface away from the head portion 10, is disposed as the identification area 21. A size of the head portion 10 in the width direction Y is greater than the size of the head portion 10 in a height direction, and a length direction of the head portion 10 is the extension direction X of the connecting portion 30. In this design, when the optical fiber connector assembly 3 is inserted into the adapter 2, the identification area 21 on the tail portion 20 may be scanned by using a camera device on a front side (that is, opposite to the tail portion 20 of the connecting portion in the extension direction 30), or the identification area 21 on the tail portion 20 may be scanned by using a camera device disposed in the width direction Y of the head portion 10.

Certainly, in some other implementations, all surfaces except the first surface 22 may be disposed as the identification area 21, to adapt to more application scenarios. In addition, the identification area 21 may alternatively be disposed on another head portion 10 or connecting portion 30.

FIG. 6 is a diagram of another structure of the optical fiber connector assembly 3 according to an embodiment of this application. Compared with the optical fiber connector assembly 3 in FIG. 3, the label structural member 5 and the optical fiber connector 6 of the optical fiber connector assembly 3 in this embodiment are no longer detachably connected. The label structural member 5 in the embodiment in FIG. 6 is a label structural member 5 improved based on the label structural member 5 in the embodiments in FIG. 3 and FIG. 4. Therefore, terms mentioned in FIG. 3 to FIG. 5 are not described below again, and reference may be directly made to the descriptions of FIG. 4 and FIG. 5. A same part of the label structural member 5 in the embodiment in FIG. 6 and that of the label structural member 5 in the embodiments in FIG. 3 and FIG. 4 are not described below again, and reference may also be directly made to the descriptions of FIG. 4 and FIG. 5. The following mainly describes characteristics of the label structural member 5 in the embodiment in FIG. 6 that are different from those of the label structural member 5 in the embodiments in FIG. 3 to FIG. 5.

With reference to FIG. 6, the head portion 10 of the label structural member 5 is of an integrated structure, without a detachable cover 13 similar to that in the embodiment in FIG. 4. The optical fiber connector 6 is also directly embedded in the head portion 10. In this embodiment, the head portion 10 may serve as the plug 61 of the optical fiber connector 6 to be directly connected to the adapter 2. In such a design, overall structural strength of the optical fiber connector assembly 3 can be improved, and a service life can be increased.

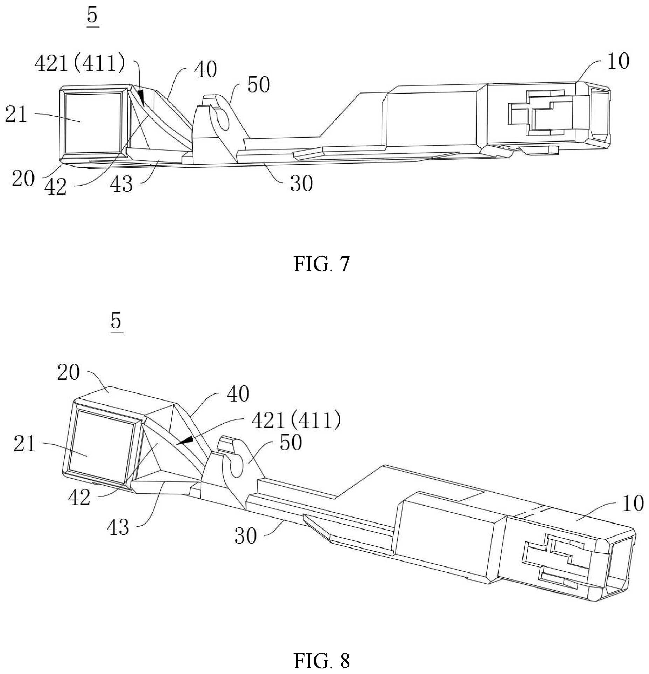

A plurality of embodiments below are described by using an example in which the first surface 22 has four corner portions 23. The following describes guide rail structures 40 of different structures by using a plurality of embodiments in FIG. 7 to FIG. 12. Each head portion 10 of label structural member 5 in FIG. 7 to FIG. 11 is described by using the head portion 10 of the label structural member 5 in the embodiment in FIG. 6 as an example. It may be understood that the guide rail structures 40 of different structures may alternatively be the label structural member 5 applied to the embodiment in FIG. 4.

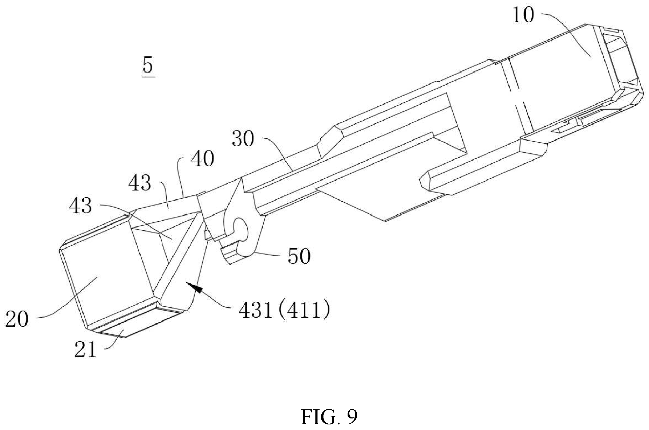

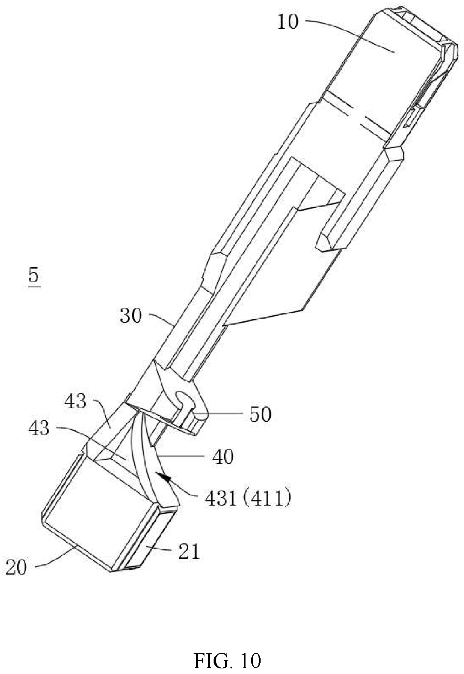

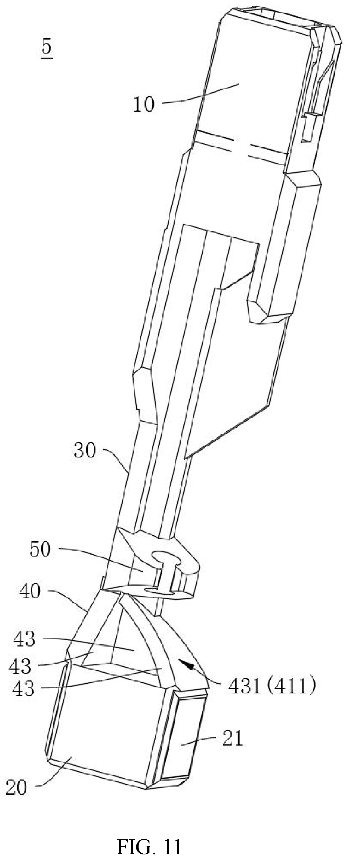

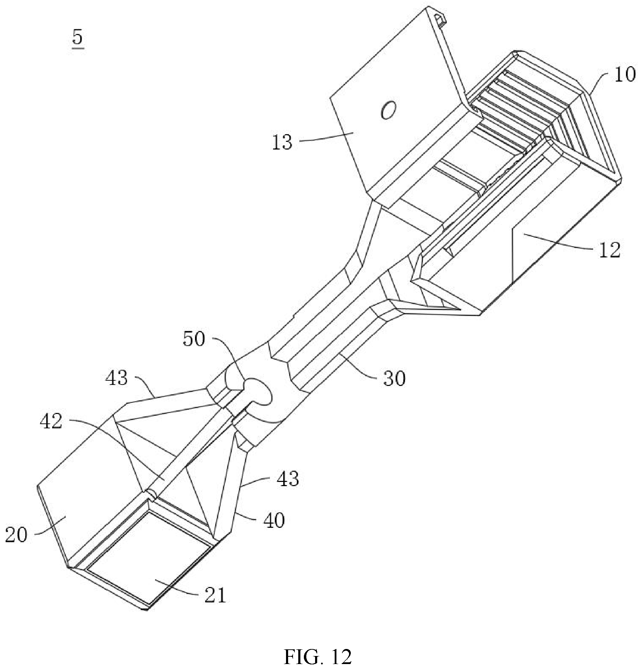

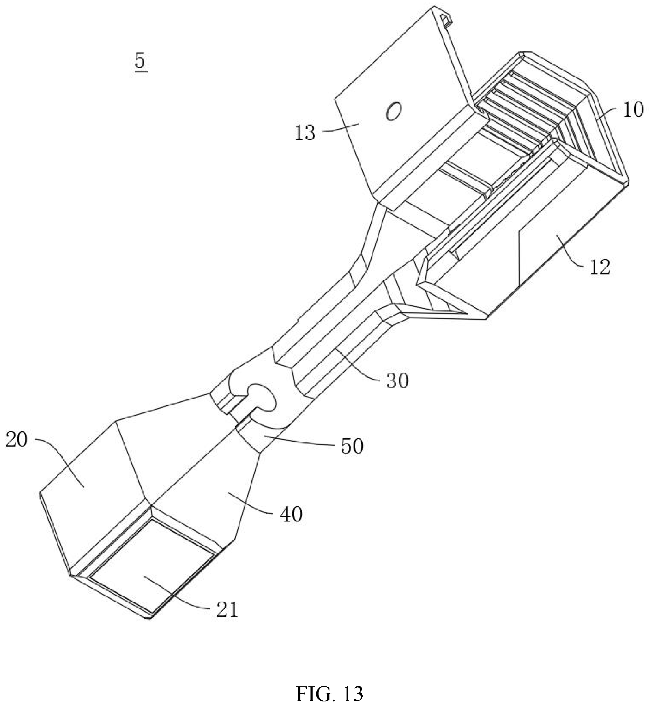

FIG. 7 is a diagram of another structure of the label structural member 5 according to an embodiment of this application. FIG. 8 is a diagram of still another structure of the label structural member 5 according to an embodiment of this application. FIG. 9 is a diagram of yet another structure of the label structural member 5 according to an embodiment of this application. FIG. 10 is a diagram of yet another structure of the label structural member 5 according to an embodiment of this application. FIG. 11 is a diagram of yet another structure of the label structural member 5 according to an embodiment of this application. FIG. 12 is a diagram of yet another structure of the label structural member 5 according to an embodiment of this application. FIG. 13 is a diagram of yet another structure of the label structural member 5 according to an embodiment of this application. The label structural member 5 in the embodiments in FIG. 7 to FIG. 13 is a label structural member 5 improved based on the label structural member 5 in the embodiment in FIG. 4. Therefore, terms mentioned in FIG. 4 and FIG. 5 are not described below again, and reference may be directly made to the descriptions of FIG. 4 and FIG. 5. A same part of the label structural member 5 in the embodiments in FIG. 7 to FIG. 13 and that of the label structural member 5 in the embodiment in FIG. 4 are not described below again, and reference may also be directly made to the descriptions of FIG. 4 and FIG. 5. The following mainly describes characteristics of the label structural member 5 in the embodiments in FIG. 7 to FIG. 13 that are different from those of the label structural member 5 in the embodiments in FIG. 4.

With reference to FIG. 7, in some embodiments, a difference from the guide rail structure 40 of the label structural member 5 in FIG. 4 lies in that a form of the first guide portion 42 in this embodiment is different. The first guide portion 42 in this embodiment includes the first guide surface 421, and the first guide surface 421 is a concave curved surface. The first guide surface 421 is disposed as the concave curved surface, so that the another optical fiber 4 located between the head portion 10 and the tail portion 20 can smoothly disengage from the tail portion 20 under guidance of the first guide surface 421 and another guide surface 411, and does not get snagged on the tail portion 20. This ensures stability of a connection between the optical fiber connector assembly 3 and the adapter 2.

With reference to FIG. 8, in some embodiments, a difference from the guide rail structure 40 of the label structural member 5 in FIG. 4 lies in that a form of the first guide portion 42 in this embodiment is different. The first guide portion 42 in this embodiment includes the first guide surface 421, and the first guide surface 421 is a convex curved surface. The first guide surface 421 is disposed as the convex curved surface, so that the another optical fiber 4 located between the head portion 10 and the tail portion 20 can smoothly disengage from the tail portion 20 under guidance of the first guide surface 421 and another guide surface 411.

With reference to FIG. 9, in some embodiments, different from the guide rail structure 40 of the label structural member 5 in FIG. 4, the guide rail structure 40 in this embodiment includes three second guide portions 43, but does not include the first guide portion 42. Second guide surfaces 431 of the three second guide portions 43 are all planar surfaces. The three second guide surfaces 431 are all disposed as the planar surfaces, so that the another optical fiber 4 located between the head portion 10 and the tail portion 20 can smoothly disengage from the tail portion 20 under guidance of the three second guide surfaces 431. In addition, the second guide portion 43 has the second side portion 432 connected to the first surface 22, which can prevent a through hole from being formed between the second guide portion 43 and the first surface 22, to further prevent the another optical fiber 4 from mistakenly passing through the through hole between the second guide portion 43 and the first surface 22. This further reduces a possibility that the optical fiber and the label structural member 5 interfere with each other.

With reference to FIG. 10, in some embodiments, different from the guide rail structure 40 of the label structural member 5 in FIG. 4, the guide rail structure 40 in this embodiment includes three second guide portions 43, but does not include the first guide portion 42. At least one second guide surface 431 of the three second guide portions 43 is a concave curved surface, and the other second guide surfaces 431 are planar surfaces. The three second guide surfaces 431 are disposed as the planar surfaces or the concave curved surfaces, so that the another optical fiber 4 located between the head portion 10 and the tail portion 20 can smoothly disengage from the tail portion 20 under guidance of the three second guide surfaces 431. This can also further prevent the another optical fiber 4 from mistakenly passing through the through hole between the second guide portion 43 and the first surface 22, which further reduces a possibility that the optical fiber and the label structural member 5 interfere with each other.

With reference to FIG. 11, in some embodiments, different from the guide rail structure 40 of the label structural member 5 in FIG. 4, the guide rail structure 40 in this embodiment includes three second guide portions 43, but does not include the first guide portion 42. At least one second guide surface 431 of the three second guide portions 43 is a convex curved surface, and the other second guide surfaces 431 are planar surfaces. The three second guide surfaces 431 are disposed as the planar surfaces or the convex curved surfaces, so that the another optical fiber 4 located between the head portion 10 and the tail portion 20 can smoothly disengage from the tail portion 20 under guidance of the three second guide surfaces 431. This can also further prevent the another optical fiber 4 from mistakenly passing through the through hole between the second guide portion 43 and the first surface 22, which further reduces a possibility that the optical fiber and the label structural member 5 interfere with each other.

With reference to FIG. 12, in some embodiments, a difference from the guide rail structure 40 of the label structural member 5 in FIG. 4 lies in that a form of the first guide portion 42 in this embodiment is different. The first guide portion 42 in this embodiment is of a post-like structure. The first guide portion 42 is used, so that the another optical fiber 4 located between the head portion 10 and the tail portion 20 can smoothly disengage from the tail portion 20 under guidance of the first guide portion 42 and another guide portion 41, and does not get snagged on the tail portion 20. This ensures stability of the connection between the optical fiber connector assembly 3 and the adapter 2.

It may be understood that the first guide portion 42 may be a straight rod-like structure, or may be a rod-like structure with a specific radian.

It may be understood that, different guide rail structures 40 in the embodiments in FIG. 7 to FIG. 12 may be combined with each other. For example, the guide surface 411 may be a random combination of a concave surface, a convex surface, and a planar surface.

With reference to FIG. 13, in some embodiments, different from the guide rail structure 40 of the label structural member 5 in FIG. 4, the guide rail structure 40 in this embodiment is of a truncated cone structure. An end of the guide rail structure 40 facing the connecting portion 30 is connected to the other end 32 of the connecting portion 30 in the extension direction X , and an end of the guide rail structure 40 facing the first surface 22 is connected to the first surface 22. In addition, an edge of the end of the guide rail structure 40 facing the first surface 22 approximately overlaps an edge of the first surface 22. The guide rail structure 40 in this embodiment can also effectively guide the another optical fiber 4 located between the head portion 10 and the tail portion 20 to smoothly disengage from the tail portion 20, so that the another optical fiber 4 does not get snagged on the tail portion 20. This ensures stability of the connection between the optical fiber connector assembly 3 and the adapter 2.

It may be understood that, in some other implementations, the guide rail structure 40 may also be of a frustum-like structure.

It should be noted that, in this embodiment, it may be understood as that the first surface of the tail portion is substantially covered by the guide rail structure, and therefore cannot be directly shown in the figure. Only an edge of the first surface can be seen in the figure. Certainly, it may alternatively be understood as that the guide rail structure is formed by the first surface of the tail portion, and in this case, the guide rail structure is a part of the tail portion.

It should be noted that, for an optical fiber connector assembly 3, an optical fiber other than the optical fiber 7, in the accommodating space 120 between the head portion 10 and the tail portion 20 of the label structural member 5 that corresponds to the optical fiber connector assembly 3, connected to the optical fiber connector 6 all is "another optical fiber 4" mentioned above or below.

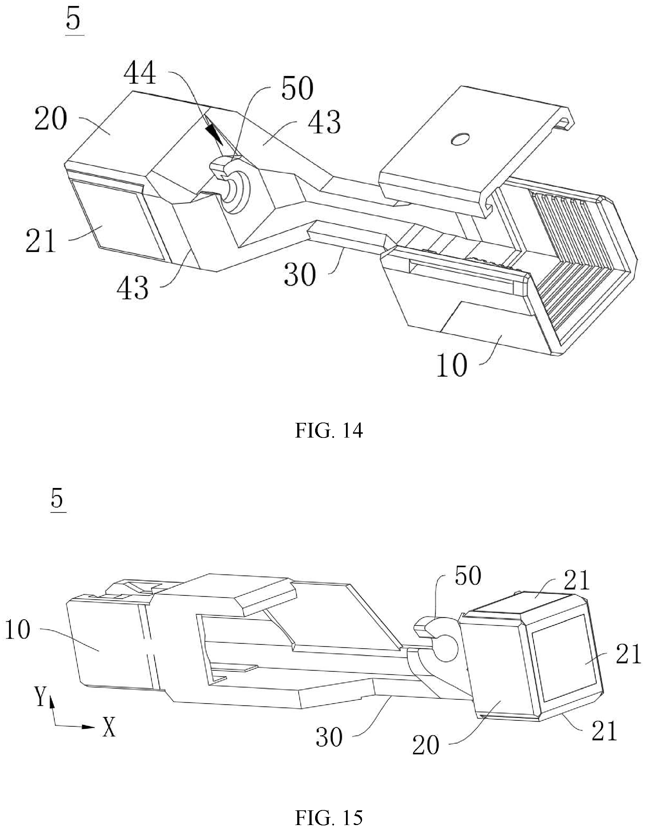

FIG. 14 is a diagram of yet another structure of the label structural member 5 according to an embodiment of this application. The label structural member 5 in the embodiment in FIG. 14 is a label structural member 5 improved based on the label structural member 5 in the embodiments in FIG. 3 and FIG. 4. Therefore, terms mentioned in FIG. 3 to FIG. 5 are not described below again, and reference may be directly made to the descriptions of FIG. 4 and FIG. 5. A same part of the label structural member 5 in the embodiment in FIG. 14 and that of the label structural member 5 in the embodiments in FIG. 3 and FIG. 4 are not described below again, and reference may also be directly made to the descriptions of FIG. 4 and FIG. 5. The following mainly describes characteristics of the label structural member 5 in the embodiment in FIG. 14 that are different from those of the label structural member 5 in the embodiments in FIG. 3 to FIG. 5.

With reference to FIG. 14, a position of the fiber clip 50 of the label structural member 5 in the embodiment in FIG. 14 is different from a position of the fiber clip 50 of the label structural member 5 in FIG. 4. The fiber clip 50 in this embodiment is disposed on the guide rail structure 40. In this embodiment, because the fiber clip 50 is disposed on the guide rail structure 40, a distance between the fiber clip 50 and the first surface 22 can be further reduced on a premise of ensuring that the optical fiber 7 connected to the optical fiber connector 6 can be smoothly bent, which further reduces a probability that the another optical fiber 4 passes through a region between the fiber clip 50 and the first surface 22. Because the boot 63 of the optical fiber connector 6 and the optical fiber 7 connected to the optical fiber connector 6 are accommodated in a region between the fiber clip 50 and the head portion 10, and the optical fiber 7 connected to the optical fiber connector 6 is fastened by the fiber clip 50, a gap between the optical fiber 7 connected to the optical fiber connector 6 and the connecting portion 30 is insufficient for inserting the another optical fiber 4. Therefore, the label structure in this embodiment can effectively reduce a possibility that the another optical fiber 4 passes through the accommodating space 120 between the head portion 10 and the tail portion 20. In this way, interference between the another optical fiber 4 and the tail portion 20 of the label structural member 5 is reduced. This ensures stability of the connection between the optical fiber connector assembly 3 and the adapter 2.

In some implementations, the guide rail structure 40 includes three second guide portions 43. The three second guide portions 43 enclose an accommodating space 44, and the fiber clip 50 is disposed in the accommodating space 44 enclosed by the three second guide portions 43. In this case, three sides of the first surface 22 are connected to three second side portions 432 of the three second guide portions 43 in a one-to-one correspondence, and the first surface 22 further has a side that is not blocked by the second guide portion 43. Therefore, the optical fiber 7 connected to the optical fiber connector 6 may extend out of the unsealed edge to the accommodating space 44. In this implementation, the three second guide portions 43 may be used to prevent the another optical fiber 4 and the tail portion 20 from interfering with each other, and the optical fiber 7 connected to the optical fiber connector 6 can be fastened by using the fiber clip 50 disposed in the accommodating space 44. In addition, a length between the fiber clip 50 and the head portion 10 can be effectively increased, to accommodate the optical fiber connector 6 with a long boot 63.

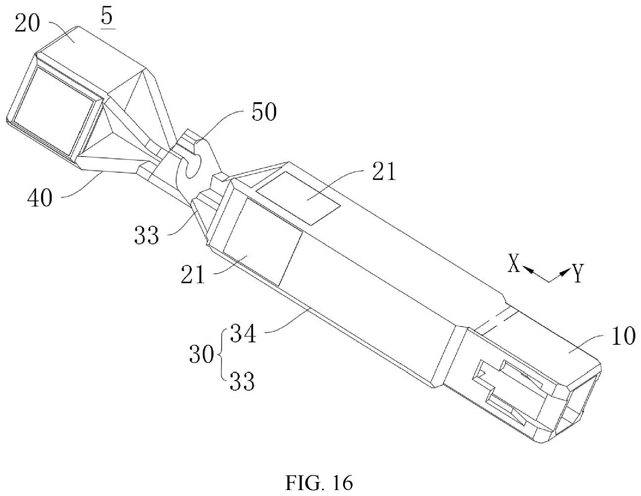

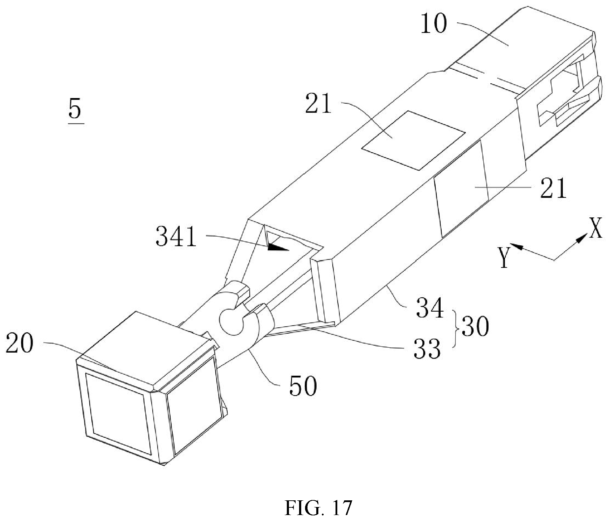

FIG. 15 is a diagram of yet another structure of the label structural member 5 according to an embodiment of this application. FIG. 16 is a diagram of yet another structure of the label structural member 5 according to an embodiment of this application. FIG. 17 is a diagram of yet another structure of the label structural member 5 according to an embodiment of this application. The label structural member 5 in the embodiments in FIG. 15 to FIG. 17 is a label structural member 5 improved based on the label structural member 5 in the embodiment in FIG. 4. Therefore, terms mentioned in FIG. 4 and FIG. 5 are not described below again, and reference may be directly made to the descriptions of FIG. 4 and FIG. 5. A same part of the label structural member 5 in the embodiments in FIG. 15 to FIG. 17 and that of the label structural member 5 in the embodiment in FIG. 4 are not described below again, and reference may also be directly made to the descriptions of FIG. 4 and FIG. 5. The following mainly describes characteristics of the label structural member 5 in the embodiments in FIG. 15 to FIG. 17 that are different from those of the label structural member 5 in the embodiments in FIG. 4.

With reference to FIG. 15, in some embodiments, the tail portion 20 of the label structural member 5 is in a cuboid shape, the head portion 10 of the label structural member 5 is of an integrated structure, and the detachable cover 13 in the embodiment in FIG. 4 is not disposed.

In some implementations, in the width direction Y of the head portion 10, two opposite surfaces of the tail portion 20 are disposed as identification areas 21, and a surface of the tail portion 20 away from the head portion 10 is disposed as the identification area 21. In this implementation, three identification areas 21 are disposed in total. Therefore, when a plurality of optical fiber connector assemblies 3 are closely arranged in a single row, at least one identification area 21 in the width direction Y of the head portion 10 may face a camera on an upper side of the subrack 1. In this way, even if the identification area 21 on the tail portion 20 far away from the head portion 10 is blocked, the identification area 21 in the width direction Y of the head portion 10 may be scanned by the camera on the upper side of the subrack 1. Therefore, for the label structural member 5 in this embodiment, label information can be accurately identified in more application scenarios.

With reference to FIG. 16, in some embodiments, the connecting portion 30 includes a first portion 33 and a second portion 34. The first portion 33 is in a rod shape, and the second portion 34 is of a hollow frame-like structure. The first portion 33 is connected between the guide rail structure 40 and the second portion 34, and the second portion 34 is connected between the first portion 33 and the head portion 10. The head portion 10 in this embodiment may be of an integrated structure or the structure of the detachable head portion 10 in FIG. 4. The optical fiber connector 6 is assembled into the receptacle 11 of the head portion 10 and a hollow accommodating cavity 341 of the second portion 34. The fiber clip 50 is disposed on the first portion 33. The optical fiber 7 connected to the optical fiber connector 6 extends out of the hollow accommodating cavity 341 of the second portion 34 and is fastened by using the fiber clip 50. In this embodiment, the second portion 34 and the receptacle 11 of the head portion 10 may accommodate most or all of the optical fiber connector 6, to improve a protection capability for the optical fiber connector 6.

In some implementations, a surface of a segment of the second portion 34 facing the first portion 33 is disposed as the identification area 21. It may be understood that a plurality of surfaces of the second portion 34 may be disposed as identification areas 21, or a part of the surfaces may be disposed as identification areas 21.

In some implementations, in the width direction Y of the head portion 10, two opposite surfaces of the second portion 34 facing a segment of the first portion 33 are both disposed as identification areas 21. Therefore, when a plurality of optical fiber connector assemblies 3 are closely arranged in a single row, in the width direction Y of the head portion 10, at least one identification area 21 may face a camera on an upper side of the subrack 1, to accurately identify the label information by using the camera on the upper side of the subrack 1.

With reference to FIG. 17, in some embodiments, compared with the embodiment in FIG. 16, the identification area 21 is disposed on a surface of a segment of the second portion 34 facing the head portion 10. For other parts, refer to the embodiment in FIG. 16. Details are not described herein again.

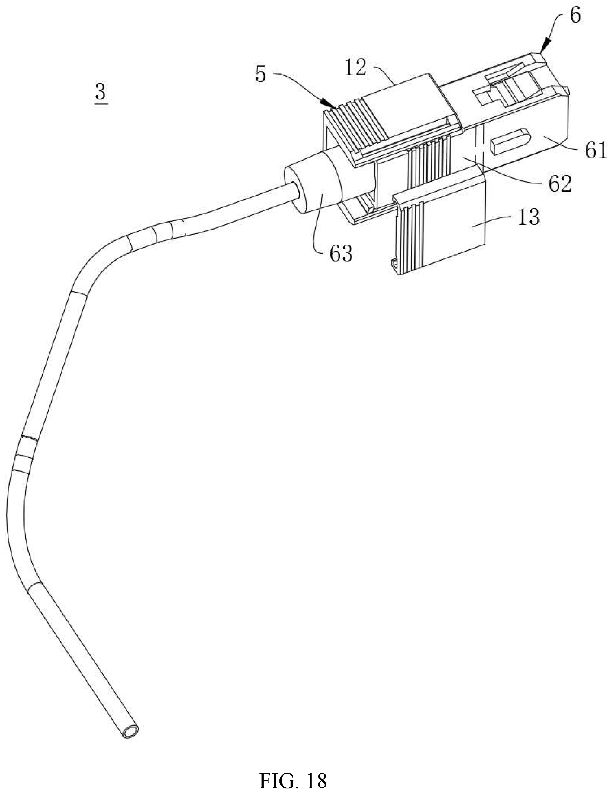

FIG. 18 is a diagram of yet another structure of the optical fiber connector assembly 3 according to an embodiment of this application.

With reference to FIG. 18, in some embodiments, the optical fiber connector assembly 3 includes an optical fiber connector 6 and a label structural member 5. For the optical fiber connector 6, refer to the optical fiber connector 6 in the foregoing embodiments. Details about the optical fiber connector 6 are not described herein again. The optical fiber connector 6 and the label structural member 5 may be of integrated structures. For example, a body of the optical fiber connector 6 and a head portion 10 of the label structural member 5 may be of the integrated structures.

The label structural member 5 includes only the head portion 10 of the label structural member 5 in the embodiment in FIG. 4, and does not include the connecting portion 30 and the tail portion 20 of the foregoing label structural member 5. The head portion 10 in this embodiment is sleeved on an intermediate member 62 of the optical fiber connector 6, and the head portion 10 also includes a fastening frame 12 and a cover 13 that is detachably disposed on the fastening frame 12. An identification area 21 is disposed on an outer surface of the head portion 10. It may be understood that a plurality of outer surfaces of the fastening frame 12 and an outer surface of the cover 13 may all be disposed as identification areas 21. Certainly, a part of the outer surfaces may alternatively be disposed as identification areas 21, to set label information. In this embodiment, the tail portion 20 in the foregoing embodiment is not disposed, which can prevent the tail portion 20 and another optical fiber 4 from interfering with each other.

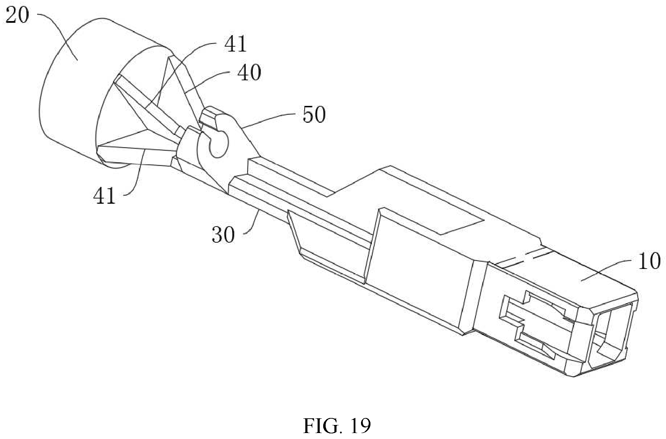

FIG. 19 is a diagram of yet another structure of the label structural member 5 according to an embodiment of this application.

With reference to FIG. 19, the label structure 5 includes a head portion 10, a tail portion 20, and a guide rail structure 40 and a connecting portion 30 that are located between the head portion 10 and the tail portion 20. The head portion 10 is configured to be fastened to the optical fiber connector 6. The tail portion 20 includes an identification area 21, and the identification area 21 is configured to be provided with label information. One end 31 of the connecting portion 30 in an extension direction X is connected to the head portion 10, and the guide rail structure 40 is connected to the other end 32 of the connecting portion 30 in the extension direction X and a first surface 22 of the tail portion 20 facing the head portion 10.

In some implementations, the guide rail structure 40 includes a plurality of guide portions 41 that extend from the other end 32 of the connecting portion 30 to an edge of the first surface 22, and the plurality of guide portions 41 are spaced apart around the edge of the first surface 22. In this embodiment, there are the plurality of guide portions 41 that extend from the other end 32 of the connecting portion 30 to the edge of the first surface 22, and the plurality of guide portions 41 are spaced apart around the edge of the first surface 22, which can also prevent interference with another optical fiber 4 when the edge of the first surface 22 is a curve, to ensure that optical fiber connector assemblies 3 arranged in high density can be properly and stably connected to adapters 2.

In some embodiments, the edge of the first surface 22 is a curve. For example, the first surface 22 may be in a circular shape, an elliptic shape, or the like. Specifically, the first surface 22 may be a surface of any shape without the foregoing corner portions.

In some embodiments, the first surface 22 is in the circular shape, and a central angle corresponding to a position at which any two adjacent guide portions 41 are connected to the edge of the first surface 22 does not exceed 90 degrees.

In some embodiments, the guide rail structure 40 includes a plurality of guide portions 41, and the plurality of guide portions 41 extend from the other end 32 of the connecting portion 30 in the extension direction X to the edge of the first surface 22. In this way, the another optical fiber 4 located between the head portion 10 and the tail portion 20 can avoid interference with the tail portion 20, to ensure that the optical fiber connector assemblies 3 arranged in high density can be properly and stably connected to the adapters 2.

In some implementations, the identification area 21 is disposed on a surface of the tail portion 20 away from the head portion 10.

It may be understood that, for the fiber clip 50 and the head portion 10 of the label structural member 5 in the embodiment in FIG. 19, reference may be made to the foregoing embodiments. Details are not described herein again.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A label structural member (5), wherein the label structural member (5) comprises a head portion (10), a tail portion (20), and a connecting portion (30) connected between the head portion (10) and the tail portion (20), the head portion (10) is configured to connect an optical fiber connector (6), the tail portion (20) comprises an identification area (21), and the identification area (21) is configured to be provided with label information; and
the label structural member (5) further comprises a fiber clip (50) disposed on the connecting portion (30), and the fiber clip (50) is configured to clamp an optical fiber connected to the optical fiber connector (6).

2. The label structural member (5) according to claim 1, wherein the fiber clip (50) is provided with a slot (51) that extends in an extension direction (X) through the connecting portion (30).

3. The label structural member (5) according to claim 1 or 2, wherein the fiber clip (50) comprises an inclined surface (52) facing the head portion (10), the inclined surface (52) extends from the connecting portion (30) to an end portion of the fiber clip (50) away from the connecting portion (30), and the inclined surface (52) forms an obtuse angle (23) with the extension direction (X) of the connecting portion (30).

4. The label structural member (5) according to claim 1, wherein the label structural member (5) further comprises a guide rail structure (40), and the guide rail structure (40) is connected between the connecting portion (30) and a first surface (22) of the tail portion (20) facing the head portion (10).

5. The label structural member (5) according to claim 4, wherein a plurality of corner portions (23) are formed by outer edges of the first surface (22), one end (31) of the connecting portion (30) in an extension direction (X) is connected to the head portion (10), and the guide rail structure (40) is connected between the other end (32) in the extension direction (X) of the connecting portion (30) and the plurality of corner portions (23).

6. The label structural member (5) according to claim 5, wherein the guide rail structure (40) comprises a plurality of guide portions (41), the plurality of guide portions (41) extend to the plurality of corner portions (23) from the other end (32) in the extension direction (X) of the connecting portion (30), and each of the corner portions (23) is connected to its corresponding guide portion (41).

7. The label structural member (5) according to claim 6, wherein each of the guide portions (41) comprises a guide surface (411), and the guide surface (411) extends from the other end (32) in the extension direction (X) of the connecting portion (30) to at least one of the plurality of corner portions (23).

8. The label structural member (5) according to claim 6 or 7, wherein the plurality of guide portions (41) comprise at least one first guide portion (42), the first guide portion (42) comprises a first guide surface (421), and the first guide surface (421) extends from the other end (32) in the extension direction (X) of the connecting portion (30) to one of the plurality of corner portions (23).

9. The label structural member (5) according to claim 8, wherein the plurality of guide portions (41) comprise at least one second guide portion (43), the second guide portion (43) comprises a second guide surface (431), and the second guide surface (431) extends from the other end (32) in the extension direction (X) of the connecting portion (30) to two adjacent corner portions (23) of the plurality of corner portions (23).

10. The label structural member (5) according to claim 9, wherein there is one first guide portion (42), there are two second guide portions (43), the first surface (22) comprises four corner portions (23), the four corner portions (23) are a first corner portion (231), a second corner portion (232), a third corner portion (233), and a fourth corner portion (234) respectively, the first guide surface (421) extends from the other end (32) in the extension direction (X) of the connecting portion (30) to the first corner portion (231), one second guide surface (431) extends from the other end (32) in the extension direction (X) of the connecting portion (30) to the second corner portion (232) and the third corner portion (233), and the other second guide surface (431) extends from the other end (32) in the extension direction (X) of the connecting portion (30) to the third corner portion (233) and the fourth corner portion (234).

11. The label structural member (5) according to claim 10, wherein the first guide portion (42) and the two second guide portions (43) are all of plate-like structures, the first guide portion (42) comprises a first side portion (422) extending from the first corner portion (231) to the second guide portion (43) in an extension direction of the first surface (22), the second guide portion (43) comprises a second side portion (432), and the second side portion (432) is connected to an edge defined by two adjacent corner portions (23) of the first surface (22).

12. The label structural member (5) according to any one of claims 7 to 11, wherein the guide surface (411) is a planar surface, or a concave curved surface, or a convex curved surface.

13. The label structural member (5) according to any one of claims 6 to 12, wherein the guide portion (41) is of a post-like structure, one end of the guide portion (41) is connected to the other end (32) in the extension direction (X) of the connecting portion (30), and the other end of the guide portion (41) is connected to one corner portion (23).

14. The label structural member (5) according to any one of claims 4 to 13, wherein the fiber clip (50) is connected to the guide rail structure (40).

15. The label structural member (5) according to any one of claims 1 to 14, wherein the tail portion (20) is of a block-like structure with a plurality of surfaces, and at least two of the plurality of surfaces of the tail portion (20) are identification areas (21); and/or
an outer surface of the connecting portion (30) is the identification area (21) used to set label information; and/or
an outer surface of the head portion (10) is the identification area (21) used to set label information.

16. A label structural member (5), wherein the label structural member (5) comprises a head portion (10), a connecting portion (30), a guide rail structure (40), and a tail portion (20) that are sequentially connected, the head portion (10) is configured to connect an optical fiber connector (6), the tail portion (20) comprises an identification area (21) and a first surface (22), the identification area (21) is configured to be provided with label information, the first surface (22) faces the head portion (10), a plurality of corner portions (23) are formed by outer edges of the first surface (22), one end (31) of the connecting portion (30) in an extension direction (X) is connected to the head portion (10), and the guide rail structure (40) is connected between the other end (32) of the connecting portion (30) in the extension direction (X) and the plurality of corner portions (23).

17. The label structural member (5) according to claim 16, wherein the guide rail structure (40) comprises a plurality of guide portions (41), the plurality of guide portions (41) extend to the plurality of corner portions (23) from the other end (32) in the extension direction (X) of the connecting portion (30), and each of the corner portions (23) is connected to its corresponding guide portion (41).

18. The label structural member (5) according to claim 17, wherein each of the guide portions (41) comprises a guide surface (411), and the guide surface (411) extends from the other end (32) in the extension direction (X) of the connecting portion (30) to at least one of the plurality of corner portions (23).

19. The label structural member (5) according to claim 16 or 17, wherein the plurality of guide portions (41) comprise at least one first guide portion (42), the first guide portion (42) comprises a first guide surface (421), and the first guide surface (421) extends from the other end (32) in the extension direction (X) of the connecting portion (30) to one of the plurality of corner portions (23).

20. The label structural member (5) according to claim 19, wherein the plurality of guide portions (41) comprise at least one second guide portion (43), the second guide portion (43) comprises a second guide surface (431), and the second guide surface (431) extends from the other end (32) in the extension direction (X) of the connecting portion (30) to two adjacent corner portions (23) of the plurality of corner portions (23).

21. The label structural member (5) according to any one of claims 16 to 20, wherein the label structural member (5) further comprises a fiber clip (50) located between the head portion (10) and the tail portion (20), the fiber clip (50) is disposed on the connecting portion (30) or the guide rail structure (40), and the fiber clip (50) is configured to clamp an optical fiber connected to the optical fiber connector (6).

22. The label structural member (5) according to claim 21, wherein the fiber clip (50) is provided with a slot (51) that extends in an extension direction (X) through the connecting portion (30).

23. The label structural member (5) according to claim 21 or 22, wherein the fiber clip (50) comprises an inclined surface (52) facing the head portion (10), the inclined surface (52) extends from the connecting portion (30) to an end portion of the fiber clip (50) away from the connecting portion (30), and the inclined surface (52) forms an obtuse angle (23) with the extension direction (X) of the connecting portion (30).

24. An optical fiber connector assembly (3), wherein the optical fiber connector assembly (3) comprises an optical fiber connector (6) and the label structural member (5) according to any one of claims 1 to 23, and a body of the optical fiber connector (6) is accommodated in a receptacle (11) of the head portion (10).

25. A communication device (1000), comprising:
a subrack (1), wherein a plurality of adapters (2) are disposed on the subrack (1); and
the optical fiber connector assembly (3) according to claim 24, wherein the optical fiber connector assembly (3) is configured to be inserted into the adapter (2).
